(19) Europäisches Patentamt
European Patent Office
Office européen des brevets

(11) **EP 3 707 542 B1**

(12) **EUROPÄISCHE PATENTSCHRIFT**

(45) Veröffentlichungstag und Bekanntmachung des Hinweises auf die Patenterteilung:
**19.11.2025  Patentblatt 2025/47**

(21) Anmeldenummer: **18786747.8**

(22) Anmeldetag: **12.10.2018**

(51) Internationale Patentklassifikation (IPC):
**G02B 17/00** (2006.01)    **G02B 17/02** (2006.01)
**G02B 26/06** (2006.01)

(52) Gemeinsame Patentklassifikation (CPC):
**G01B 9/02018; G01J 1/56; G01J 3/42;**
**G02B 26/001;** G01J 2003/1234

(86) Internationale Anmeldenummer:
**PCT/EP2018/077860**

(87) Internationale Veröffentlichungsnummer:
**WO 2019/091699 (16.05.2019 Gazette 2019/20)**

(54) **OPTISCHES SYSTEM**

OPTICAL SYSTEM

SYSTÈME OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2017  DE 102017126140**

(43) Veröffentlichungstag der Anmeldung:
**16.09.2020  Patentblatt 2020/38**

(73) Patentinhaber: **Deutsches Zentrum für Luft- und Raumfahrt e.V.**
**53227 Bonn (DE)**

(72) Erfinder:
• **LORBEER, Raoul-Amadeus**
**71106 Magstadt (DE)**
• **EWERS, Benjamin**
**71034 Böblingen (DE)**
• **SPEISER, Jochen**
**70190 Stuttgart (DE)**

(74) Vertreter: **Hoeger, Stellrecht & Partner Patentanwälte mbB**
**Uhlandstrasse 14c**
**70182 Stuttgart (DE)**

(56) Entgegenhaltungen:
WO-A1-2011/027731    US-A1- 2002 057 725
US-A1- 2006 165 141    US-A1- 2008 080 584
US-A1- 2010 265 512    US-A1- 2016 294 146
US-A1- 2017 229 835

**Beschreibung**

Die vorliegende Erfindung betrifft ein optisches System zum mehrfachen Umlenken eines elektromagnetischen Strahlungsfeldes, welches System eine erste Reflexionsfläche und eine zweite Reflexionsfläche umfasst, welche erste Reflexionsfläche eine erste Reflexionsflächenebene definiert und welche zweite Reflexionsfläche eine zweite Reflexionsflächenebene definiert, welche erste Reflexionsfläche eine erste, elektromagnetische Strahlung reflektierende Beschichtung umfasst und welche zweite Reflexionsfläche eine zweite, elektromagnetische Strahlung reflektierende Beschichtung umfasst, wobei die erste Reflexionsfläche und die zweite Reflexionsfläche voneinander beabstandet sind, wobei die erste Reflexionsflächenebene und die zweite Reflexionsflächenebene gegeneinander geneigt sind und einen Neigungswinkel einschließen und wobei die erste Reflexionsfläche und/oder die zweite Reflexionsfläche mindestens eine optische Einkoppelöffnung zum Einkoppeln eines optischen Strahlungsfeldes zwischen die erste und die zweite reflektierende Beschichtung aufweist.

Ferner betrifft die vorliegende Erfindung ein Messgerät zum Messen einer Leistung eines elektromagnetischen Strahlungsfeldes mit einer Strahlungsdruckmesseinrichtung.

Weiterhin betrifft die vorliegende Erfindung eine Absorptionsmesseinrichtung zum Messen der Absorption elektromagnetischer Strahlung in einer Probe, umfassend eine Probenzelle zum Aufnehmen der Probe.

Außerdem betrifft die vorliegende Erfindung eine Distanzmesseinrichtung umfassend ein Interferometer.

Weiters betrifft die vorliegende Erfindung eine Scanvorrichtung zum Ablenken eines Strahlungsfelds umfassend eine Ablenkeinrichtung.

Optische Systeme der eingangs beschriebenen Art sind insbesondere in Form optischer Verzögerungsstrecken und optischer Phasenschieber bekannt. Optische Verzögerungsstrecken werden in vielen wissenschaftlichen und technischen Anwendungen eingesetzt. Sie dienen im Wesentlichen dem Zweck, einen existierenden optischen Impuls um eine definierte Zeit gegenüber einem anderen Ereignis zu verzögern.

Bei einem Phasenschieber wird die Phase einer kontinuierlichen optischen Strahlungsquelle oder einer gepulsten optischen Strahlungsquelle um einen bestimmten Teil räumlich oder zeitlich verschoben. Prinzipiell handelt es sich dabei auch um eine optische Verzögerungsstrecke, nur dass hierbei nicht die definierte Verzögerung relativ zu einem Ereignis bestimmt wird, sondern relativ zu einer bestimmten Phasenlage.

Zur Realisierung optischer Verzögerungsstrecken und Phasenschiebern sind insbesondere zwei Varianten bekannt. Zum einen kann die reale zurückzulegende Wegstrecke des optischen Lichts variiert werden, zum anderen kann die optische Gruppengeschwindigkeit in verschieden Materialien so reduziert werden, dass das optische Licht oder besser das Strahlungsfeld eine Verzögerung erfährt.

Bei bekannten Konzepten zur Ausbildung optischer Verzögerungsstrecken, und zwar insbesondere um diese möglichst kompakt, schnell und präzise zu gestalten, stehen sich in der Regel drei Eigenschaften konkurrierend gegenüber. Werden große Verzögerungszeiten benötigt, wird dies meist mit einer sehr geringen dynamischen Geschwindigkeit erkauft. Werden möglichst große Dynamiken benötigt, ist es meist nicht möglich, große Verzögerungszeiten einzustellen. Ferner arbeiten bekannte Systeme meist kontinuierlich, so dass sich keine statischen Verzögerungszeiten einstellen lassen.

Die US 2008/0080584 A1 offenbart ein Verstärkungsmodul eines Festkörperlasers. Verfahren und Vorrichtungen zum Pumpen eines Lasers sind in der US 2006/0165151 A1 beschrieben. Aus der US 2010/0265512 A1 ist ein Vervielfacher mit einer optomechanischen optischen Verzögerungsstrecke für mikroelektromechanische Systeme bekannt. In der US 2002/0057725 A1 ist ein Laser mit einem Verstärkungsmedium zum Bereitstellen einer integrierten optischen Pumpkavität offenbart. Die US 2017/0229835 A1 betrifft Laserverstärker. Aus der US 2016/0294146 A1 ist eine räumliche gechirpte Kavität für das temporäre Dehnen und Komprimieren optischer Pulse bekannt. Und schließlich ist in der WO 2011/027731 A1 eine ebene Wellenleiterlaservorrichtung offenbart.

Es ist daher eine Aufgabe der vorliegenden Erfindung, ein optisches System der eingangs beschriebenen Art möglichst einfach und kompakt auszubilden.

Diese Aufgabe wird bei einem optischen System der eingangs beschriebenen Art erfindungsgemäß dadurch gelöst, dass die mindestens eine optische Einkoppelöffnung in Form einer wellenlängenabhängigen und einfallswinkelabhängigen Einkoppelöffnung für ein optisches Strahlungsfeld ausgebildet ist und dass die erste reflektierende Beschichtung und/oder die zweite reflektierende Beschichtung die mindestens eine wellenlängenabhängige und einfallswinkelabhängige Einkoppelöffnung definieren oder umfassen.

Mit dem vorgeschlagenen weitergebildeten optischen System ist es insbesondere möglich, mehrere Durchläufe eines Strahlungsfeldes auf einfache Weise zu erreichen, nämlich durch Mehrfachreflexionen an der ersten reflektierenden Beschichtung und an der zweiten reflektierenden Beschichtung. Das Strahlungsfeld verbleibt also für die mehreren Durchläufe oder Umläufe, und zwar mehr als einen Hin- und Rücklauf zwischen den beiden Beschichtungen, innerhalb des Systems zwischen den beiden Beschichtungen. Das Strahlungsfeld wird also zwischen der ersten reflektierenden Beschichtung und der zweiten reflektierenden Beschichtung praktisch eingefangen und mehrfach hin und her reflektiert. Abhängig von dem gewählten Neigungswinkel ist es so insbesondere möglich, auch bei einem nur sehr geringen Abstand zwischen den beiden Beschichtungen, ein Strahlungsfeld mit mehreren Millimetern Durchmessern bei jedem Durchgang nur um einen Bruchteil seines eigenen Durchmessers seitlich zu versetzen, so dass nach jedem Durchgang wieder nahezu derselbe Raum zwischen den Beschichtungen durchquert wird. Unter einer Einkoppelöffnung ist hier insbesondere jede Öffnung zu verstehen, die das Strahlungsfeld durchlässt, also einen Eintritt desselben in einen Bereich oder einen Raum zwischen den Beschichtungen ermöglicht. Insbesondere ist hier nicht nur eine räumliche Öffnung zu verstehen, sondern auch eine optische Öffnung, die das Strahlungsfeld unter gewissen Bedingungen zwischen die beiden Beschichtungen eindringen lässt, beispielsweise für eine bestimmte Wellenlänge oder einen bestimmten Wellenlängenbereich unter einem bestimmten Einfallswinkel oder einem bestimmten Einfallswinkelbereich und/oder abhängig von einer Polarisation des Strahlungsfeldes. Insbesondere die letztgenannten optionalen Abhängigkeiten ermöglichen es für die gesamte erste Reflexionsfläche und/oder die gesamt zweite Reflexionsfläche selektiv eine Öffnung für ein Strahlungsfeld zu definieren, so dass keine optimale Fokussierung des Strahlungsfeldes auf einen bestimmten Bereich der Reflexionsflächen erforderlich ist, beispielsweise eine Einkoppelöffnung, die durch einen nicht beschichteten Flächenbereich der ersten Reflexionsfläche oder der zweiten Reflexionsfläche gebildet wird, welcher also frei ist von einer reflektierenden Beschichtung. Durch die vorgeschlagene Weiterbildung des optischen Systems können so insbesondere die aus dem Stand der Technik bekannten aufwändigen optischen Anordnungen, insbesondere von Spiegeln und Antriebsvorrichtungen zur Variation einer optischen Verzögerungsstrecke, grundsätzlich vermieden werden. Dies vereinfacht zum einen den Aufbau optischer Systeme zum mehrfachen Umlenken eines elektromagnetischen Strahlungsfeldes und zum anderen können dadurch auch signifikant Kosten eingespart werden. Durch einen kompakten Aufbau lässt sich zudem auch ein Gewicht des Systems insgesamt reduzieren, was insbesondere für Weltraumanwendungen vorteilhaft ist. Ein geringes Gewicht, insbesondere der ersten Reflexionsfläche und/oder der zweiten Reflexionsfläche hat insbesondere bei Anwendungen, bei denen eine Länge der Verzögerungsstrecke variiert wird oder eine Phase variiert werden soll, den Vorteil, dass hierfür nur geringe Massen bewegt werden müssen. Diese lassen sich deutlich schneller bewegen als große Massen. Die die erste Reflexionsflächenebene und die zweite Reflexionsflächenebene müssen keine perfekten Ebenen im mathematischen Sinn definieren. Insbesondere ist es vorteilhaft, wenn Unebenheiten der ersten Reflexionsfläche und/oder die zweiten Reflexionsfläche einen Winkel einschließen, welcher kleiner ist als der Neigungswinkel. Beispielsweise kann das optische System zur Ausbildung eines Mikrophons genutzt werden, wenn sich in Folge von Druckschwankungen, beispielsweise durch Schallwellen, im Medium zwischen den Reflexionsflächen ein Brechungsindex desselben ändert, was zu einer Änderung einer Umlaufzeit des Strahlungsfelds in einem Bereich zwischen den Reflexionsflächen führt. Aus den geänderten Umlaufzeiten können dann die Druckschwankungen ermittelt werden. Ferner ist es günstig, dass die mindestens eine optische Einkoppelöffnung in Form einer wellenlängenabhängigen und einfallswinkelabhängigen Einkoppelöffnung für ein optisches Strahlungsfeld ausgebildet ist. Eine solche Einkoppelöffnung kann sich insbesondere über einen gesamten Bereich der ersten Reflexionsfläche oder der zweiten Reflexionsfläche erstrecken. So können insbesondere Strahlungsfelder mit großem Strahlungsfelddurchmesser auf einfache Weise in den Bereich zwischen den beiden Reflexionsflächen eingekoppelt und darin eingefangen werden. Gemäß der Erfindung definieren oder umfassen die erste reflektierende Beschichtung und/oder die zweite reflektierende Beschichtung die mindestens eine wellenlängenabhängige und einfallswinkelabhängige Einkoppelöffnung. So kann also die Einkoppelöffnung durch die jeweilige Beschichtung selbst definiert werden. Die Einkoppelöffnung bildet insbesondere auch die Auskoppelöffnung, um unter entsprechenden Bedingungen, also abhängig von der Wellenlänge sowie des Auftreffwinkels auf die Beschichtung im Bereich zwischen den beiden Beschichtungen, einen Austritt des Strahlungsfeldes aus diesem Bereich zu ermöglichen.

Günstig ist es, wenn die erste Reflexionsfläche und die zweite Reflexionsfläche relativ zueinander beweglich angeordnet sind. Insbesondere kann der Neigungswinkel im Falle einer Bewegung der ersten und/oder der zweiten Reflexionsfläche unveränderlich sein. Eine bewegliche Anordnung hat insbesondere den Vorteil, dass ein Abstand und somit eine Länge einer Verzögerungsstrecke durch Bewegen einer oder beider Reflexionsflächen relativ zueinander verändert werden kann. Um eine lineare Verlängerung in Abhängigkeit eines Bewegungswegs der ersten Reflexionsfläche und/oder der zweiten Reflexionsfläche zu erreichen, ist es günstig, wenn der Neigungswinkel unveränderlich ist. Abhängig von der Anzahl der Durchläufe oder Umläufe zwischen den zwei Reflexionsflächen, das heißt jeweils ein Hin- und Rückweg zwischen den beiden Reflexionsflächen, kann so der Lichtweg durch eine Abstandsänderung auf einfache Weise um einen Faktor entsprechend der Zahl der Umläufe vergrößert werden. Insbesondere ermöglicht es die bewegliche Anordnung der ersten Reflexionsfläche und die zweiten Reflexionsfläche relativ zueinander, ein Mikrophon auszubilden. Eine Bewegung der ersten Reflexionsfläche und die zweiten Reflexionsfläche relativ zueinander in Folge einer Druckschwankung, beispielsweise in Form von Schallwellen, in dem das optische System umgebenden Medium führt zu einem sich ändernden Laufweg des elektromagnetischen Strahlungsfeldes zwischen den Reflexionsflächen, wodurch sich eine Laufzeitänderung des Strahlungsfeldes ergibt. Aus gemessenen Laufzeitänderungen können die Druckschwankungen ermittelt werden. Außerdem ermöglicht es die bewegliche Anordnung der Reflexionsflächen relativ zueinander, einen Beschleunigungssensor auszubilden, wenn eine der beiden Reflexionsflächen an einer Testmasse, welche entgegen der Wirkung einer Rückstelleinrichtung auslenkbar ist, ausgebildet wird. Die Rückstelleinrichtung kann beispielsweise ein oder mehrere Rückstellelemente in Form von Federelementen umfassen. Durch die Bewegung der Reflexionsflächen relativ zueinander in Folge auf die Testmasse wirkender Beschleunigungskräfte ändert sich wiederum die Umlaufzeit des Strahlungsfeldes im Bereich zwischen den Reflexionsflächen. Aus der Änderung der Umlaufzeit können dann wirkende Beschleunigungskräfte bei Kenntnis der Systemparameter bestimmt werden.

Vorteilhaft ist es, wenn das optische System ein erstes Reflexionselement und ein zweites Reflexionselement umfasst, welches erste Reflexionselement die erste Reflexionsfläche umfasst und welches zweite Reflexionselement die zweite Reflexionsfläche umfasst. Werden keine derartigen Reflexionselemente vorgesehen, können die erste Reflexionsfläche und/oder die zweite Reflexionsfläche mit ihren jeweiligen Beschichtungen auch selbsttragend ausgebildet sein.

Die Reflexionselemente vereinfachen die Handhabung des optischen Systems. Es können insbesondere Reflexionselemente in Form von Trägern der Beschichtungen eingesetzt werden, wobei die Reflexionsflächen insbesondere durch die Beschichtungen gebildet oder definiert werden. Die Beschichtungen können zur Ausbildung der gewünschten Reflexionsflächen jedoch auch direkt auf Bauteile anderer Einrichtungen aufgebracht werden, beispielsweise auf einem Wiegeteller einer Waage.

Ferner kann es vorteilhaft sein, wenn die erste Reflexionsfläche zur ersten Reflexionsflächenebene verschieblich, insbesondere senkrecht oder im Wesentlichen senkrecht, angeordnet oder gelagert ist und/oder wenn die zweite Reflexionsfläche zur zweiten Reflexionsflächenebene verschieblich, insbesondere senkrecht oder im Wesentlichen senkrecht, angeordnet oder gelagert ist. Insbesondere können auch das erste und/oder das zweite Reflexionselement zur ersten Reflexionsflächenebene beziehungsweise zur zweiten Reflexionsflächenebene verschieblich, insbesondere senkrecht oder im Wesentlichen senkrecht, angeordnet oder gelagert sein. Diese Anordnung ermöglicht insbesondere eine lineare Vervielfachung beispielsweise einer Verzögerungsstrecke abhängig von einer Zahl der Umläufe eines Strahlungsfeldes zwischen den Reflexionsflächen und einem Verschiebeweg der Reflexionsflächen. Eine solche Anordnung ist insbesondere auch bei einem Messgerät zum Messen einer Leistung eines elektromagnetischen Strahlungsfeldes mit einer Strahlungsdruckmesseinrichtung vorteilhaft.

Auf einfache Weise lässt sich ein Lichtweg verändern, wenn das optische System eine Abstandsänderungseinrichtung zum Verändern eines Abstands zwischen der ersten Reflexionsfläche und der zweiten Reflexionsfläche umfasst. Die Abstandsänderungseinrichtung kann insbesondere oder alternativ ausgebildet sein, um die erste und/oder die zweite Reflexionsfläche zu bewegen. Insbesondere kann sie auch ausgebildet sein, um das erste und/oder das zweite Reflexionselement zu bewegen.

Auf einfache Weise ausbilden lässt sich das optische System, wenn die Abstandsänderungseinrichtung ausgebildet ist zum Verschieben der ersten Reflexionsfläche senkrecht zur ersten Reflexionsflächenebene und/oder der zweiten Reflexionsfläche senkrecht zur zweiten Reflexionsflächenebene. Insbesondere kann die Abstandsänderungseinrichtung ausgebildet sein zum Verschieben des ersten und/oder zweiten Reflexionselements senkrecht zur ersten beziehungsweise zweiten Reflexionsflächenebene. Insbesondere kann die Abstandsänderungseinrichtung ausgebildet sein, um das erste Reflexionselement und/oder das zweite Reflexionselement parallel zu sich selbst zu verschieben. Insbesondere kann die Abstandsänderungseinrichtung eine Antriebseinrichtung zum Bewegen der ersten Reflexionsfläche und/oder der zweiten Reflexionsfläche oder zum Bewegen der ersten Beschichtung und/oder der zweiten Beschichtung umfassen.

Besonders kompakt ausbilden lässt sich das optische System, wenn die Abstandsänderungseinrichtung eine elektromagnetische oder piezomechanische Antriebseinrichtung umfasst.

Besonders schnell lassen sich Abstände ändern, wenn die Abstandsänderungseinrichtung mindestens einen Piezoaktuator umfasst. Ein solcher Piezoaktuator hat bei den beschriebenen Ausführungsformen optischer Systeme insbesondere den Vorteil, dass die erste und/oder die zweite Reflexionsfläche sehr schnell durch Verschieben um einen Verschiebeweg bewegt werden können, um einen Abstand zwischen den Reflexionsflächen zu ändern. Durch die besondere Ausbildung des optischen Systems wird jedoch ein Laufweg des Strahlungsfeldes um ein Vielfaches des Verschiebewegs, und zwar abhängig von der Anzahl der Umläufe oder Durchläufe zwischen den beiden Beschichtungen, vervielfacht.

Um mögliche Verluste im Strahlungsfeld zu minimieren, ist es günstig, wenn die erste Reflexionsfläche und die zweite Reflexionsfläche aufeinander zu weisend angeordnet oder ausgebildet sind.

Vorteilhaft ist es, wenn die erste reflektierende Beschichtung in Form einer hochreflektierenden Beschichtung oder in Form einer wellenlängen- und/oder einfallswinkelabhängigen reflektierenden Beschichtung ausgebildet ist. Ist die Beschichtung hochreflektierend, kann die optische Einkoppelöffnung insbesondere durch einen Flächenbereich der ersten Reflexionsfläche oder der zweiten Reflexionsfläche definiert werden, der nicht mit der hochreflektierenden Beschichtung versehen ist. Ist eine Reflexion der Beschichtung dagegen wellenlängen- und/oder einfallswinkelabhängig, kann insbesondere die gesamte erste Reflexionsfläche und/oder die gesamte zweite Reflexionsfläche zum Einkoppeln eines Strahlungsfeldes zwischen die Flächen genutzt werden. Dies hat insofern Vorteile, als im Wesentlichen die gesamte von der ersten Reflexionsfläche oder von der zweiten Reflexionsfläche definierte Fläche zum Einkoppeln des Strahlungsfeldes genutzt werden kann, so dass im Wesentlichen der gesamte Bereich zwischen den beiden Reflexionsflächen vom Strahlungsfeld durchsetzt wird.

Ferner ist es günstig, wenn die zweite reflektierende Beschichtung in Form einer hochreflektierenden Beschichtung oder in Form einer wellenlängen- und/oder einfallswinkelabhängigen reflektierenden Beschichtung ausgebildet ist. Hier gilt entsprechend das, was vorstehend zu den unterschiedlichen Formen der ersten reflektierenden Beschichtung ausgeführt wurde. Insbesondere sind beliebige Kombinationen von hochreflektierenden Beschichtungen und von wellenlängen- und/oder einfallswinkelabhängigen reflektierenden Beschichtungen auf der ersten Reflexionsfläche und der zweiten Reflexionsfläche möglich, also beispielsweise auf der ersten Reflexionsfläche eine wellenlängen- und einfallswinkelabhängige reflektierende Beschichtung und auf der Unterseite eine hochreflektierende Beschichtung. Auch eine umgekehrte Beschichtung ist denkbar. Ferner können auch beide Beschichtungen hochreflektierend oder auch beide Beschichtungen wellenlängen- und/oder einfallswinkelabhängig reflektierend ausgebildet sein.

Vorteilhaft ist es, wenn die erste Beschichtung und/oder die zweite Beschichtung in Form eines einfallswinkelabhängigen Kantenfilters oder eines einfachen oder doppelten Bandbassfilters ausgebildet sind. Derartige Beschichtungen ermöglichen es insbesondere, ein Strahlungsfeld in Abhängigkeit eines Einfallswinkels zwischen die beiden Reflexionsflächen einzukoppeln. So kann beispielsweise für einen Kantenfilter ober- oder unterhalb eines bestimmten Wellenlängenbereichs für einen bestimmten Einfallswinkel ein Strahlungsfeld zwischen die beiden Reflexionsflächen eingekoppelt werden. Aufgrund der gegeneinander geneigten Reflexionsflächen wird das Strahlungsfeld nach dem Eintreten in den Bereich zwischen die Reflexionsflächen zwischen aufeinanderfolgenden Reflexionen etwas verkippt, und zwar immer um das Doppelte des Neigungswinkels. Dadurch ändert sich nach jeder Reflexion im Bereich zwischen den beiden Reflexionsflächen der Winkel, unter dem das Strahlungsfeld auf die Beschichtungen auftrifft. Ist unter dem Einfallswinkel von außen eine Eintrittsbedingung für das Strahlungsfeld in den Bereich zwischen die Reflexionsfläche hinein erfüllt, so bleibt das Strahlungsfeld zwischen den beiden Reflexionsflächen gefangen, wenn nach der ersten internen Rückreflexion im Bereich zwischen den Reflexionsflächen die Eintritts- beziehungsweise Austrittsbedingung für das Strahlungsfeld nicht mehr erfüllt ist. Idealerweise ist für das Strahlungsfeld bereits nach einer inneren Reflexion zwischen den beiden Reflexionsflächen die Austrittsbedingung nicht mehr erfüllt, so dass für das Strahlungsfeld an der Beschichtung, die unter dem äußeren Einfallswinkel die Einkoppelöffnung definiert, ein Durchtritt nicht mehr möglich ist. Vielmehr wird nun das Strahlungsfeld überwiegend zurückreflektiert, insbesondere vollständig. Mit anderen Worten ändert sich eine optische Dichte der Beschichtung für das Strahlungsfeld in Abhängigkeit eines Winkels, unter dem das Strahlungsfeld auf die Beschichtung trifft. So lässt sich ein Strahlungsfeld selektiv zwischen die beiden Reflexionsflächen einkoppeln und zwischen diesen einfangen.

Günstig ist es, wenn der Kantenfilter oder der einfache oder doppelte Bandbassfilter eine Flankensteilheit aufweisen, die mindestens 1 OD/3 nm beträgt. Vorzugsweise liegt die Flankensteilheit in einem Bereich von etwa 1 OD/3 nm bis etwa 3 OD/3 nm. Insbesondere beträgt die Flankensteilheit etwa 2 OD/3 nm. Eine optische Dichte entspricht dabei insbesondere 10 dB. Mit einer minimalen Flankensteilheit wie angegeben lässt sich ein Strahlungsfeld unter einem bestimmten Einfallswinkel in einen Bereich zwischen den Reflexionsflächen einkoppeln und darin in der beschriebenen Weise einfangen. Je größer der Betrag für die Flankensteilheit ist, umso geringer sind Verluste beim Einkoppeln des Strahlungsfeldes, beispielsweise durch Reflexion auf einer äußeren Oberfläche der ersten oder zweiten Reflexionsfläche oder durch eine teilweise Transmission des Strahlungsfeldes durch die erste oder die zweite Beschichtung aus dem Bereich zwischen den Reflexionsflächen heraus. Grundsätzlich ist es wünschenswert, die Flankensteilheit so groß wie möglich vorzusehen.

Besonders effizient einsetzbar wird das optische System, wenn der Kantenfilter oder der einfache oder doppelte Bandbassfilter ein hohes Auslöschungsverhältnis aufweisen. Insbesondere beträgt eine optische Dichte der Filter mindestens 3. Weiter bevorzugt beträgt die optische Dichte der Filter mindestens 6.

Günstigerweise sind die erste Beschichtung und/oder die zweite Beschichtung in Form einer dichroitischen Beschichtung ausgebildet. Dichroitische Schichten haben insbesondere die Eigenschaft, dass ihre Reflektivität insbesondere von Einfallswinkel, Wellenlänge und Polarisation des Lichts abhängt. Insbesondere können dichroitische Schichten auch derart ausgebildet sein, dass sie eine Bandpasseigenschaft aufweisen sowie ein Transmissionsverhalten, das nahezu polarisationsunabhängig mit dem Einfallswinkel verstellbar ist.

Vorteilhafterweise sind die erste Beschichtung und/oder die zweite Beschichtung polarisationsunabhängig ausgebildet. Dies hat insbesondere den Vorteil, dass eine Reflektivität der ersten und/oder zweiten Beschichtung lediglich vom Einfallswinkel und der Wellenlänge des Strahlungsfeldes abhängt.

Um eine möglichst hohe Zahl an Mehrfachreflexionen im Festkörper zu erhalten, ist es vorteilhaft, wenn der Neigungswinkel in einem Bereich von etwa 0° bis etwa 3° liegt. Weiter bevorzugt liegt der Neigungswinkel in einem Bereich von etwa 0,5° bis etwa 1,5°. Insbesondere kann er etwa 1° betragen. Je kleiner der Neigungswinkel ist, umso größer ist die Zahl der möglichen Mehrfachreflexionen im Bereich zwischen den beiden Reflexionsflächen. Abhängig von den Eigenschaften der ersten Beschichtung und/oder der zweiten Beschichtung, insbesondere einer Flankensteilheit derselben, kann jedoch ein größerer Neigungswinkel vorteilhaft sein, um einen möglichst hohen Anteil des Strahlungsfeldes in den Festkörper einzukoppeln und in diesem einzufangen.

Günstig ist es, wenn erste Reflexionselement und/oder das zweite Reflexionselement in Form eines für elektromagnetische Strahlung durchlässigen Festkörpers ausgebildet sind. So kann das Strahlungsfeld auf einfache Weise durch das erste und/oder das zweite Reflexionselement hindurch geleitet werden.

Besonders einfach und kostengünstig ausbilden lässt sich das optische System, wenn der Festkörper in Form eines Kristalls oder aus Glas ausgebildet ist. Beispielsweise können das erste Reflexionselement und/oder das zweite Reflexionselement Träger für die erste Beschichtung und die zweite Beschichtung bilden. Eine Seitenfläche des jeweiligen Reflexionselements bildet dann die erste Reflexionsfläche beziehungsweise die zweite Reflexionsfläche, die mit der ersten Beschichtung beziehungsweise der zweiten Beschichtung versehen sind.

Günstig ist es, wenn der Kristall aus Yttrium-Aluminium-Granat oder Saphir oder aus einem Halbleiter ausgebildet ist. Derartige Kristalle lassen sich auf besonders einfache und definierte Weise ausbilden.

Vorteilhaft ist es, wenn das erste Reflexionselement und/oder das zweite Reflexionselement eine Dicke in einem Bereich von etwa 1 mm bis etwa 10 mm aufweisen. Insbesondere kann eine Dicke in einem Bereich von etwa 2 mm bis etwa 5 mm liegen. So lassen sich insbesondere sehr leichte Reflexionselemente als Träger für die erste Beschichtung oder die zweite Beschichtung ausbilden.

Auf eine wellenlängen- und einfallswinkelabhängige Beschichtung der ersten Reflexionsfläche und/oder der zweiten Reflexionsfläche kann insbesondere verzichtet werden, wenn die mindestens eine optische Einkoppelöffnung in Form eines beschichtungsfreien Einkoppelbereichs auf der ersten Reflexionsfläche oder in Form eines beschichtungsfreien Einkoppelbereichs auf der zweiten Reflexionsfläche ausgebildet ist. So können also bis auf den Einkoppelbereich die erste Reflexionsfläche und die zweite Reflexionsfläche mit einer hochreflektierenden Beschichtung versehen sein. Dies ermöglicht es insbesondere, ein Strahlungsfeld durch die so ausgebildete Einkoppelöffnung in den Bereich zwischen den Reflexionsflächen einzukoppeln. Ist der Einkoppelbereich hinreichend klein, kann nach einer Rückreflexion auf der gegenüberliegenden Reflexionsfläche das Strahlungsfeld nicht mehr aus dem Bereich zwischen den beiden Reflexionsflächen austreten, da es an der hochreflektierenden Beschichtung neben dem beschichtungsfreien Einkoppelbereich wieder in den Bereich zwischen den Reflexionsflächen, nämlich auf die andere Reflexionsfläche hin, zurückreflektiert wird. Beschichtungsfrei bezieht sich dabei ausschließlich auf die erste oder zweite Beschichtung. Der beschichtungsfreie Einkoppelbereich kann optional jedoch mit einer Antireflexionsbeschichtung versehen sein.

Günstig ist es, wenn das erste Reflexionselement und/oder das zweite Reflexionselement scheibenförmig oder quaderförmig ausgebildet sind. Derartige Reflexionselemente lassen sich insbesondere als Träger für die Beschichtungen auf einfache Weise ausbilden.

Vorteilhaft ist es, wenn die erste reflektierende Beschichtung und/oder die zweite reflektierende Beschichtung in Form einer VersaChrome® TBP01-900/11-Beschichtung oder in Form einer LP02-1064RE-Beschichtung ausgebildet sind. Solche Beschichtungen sind insbesondere von der Firma Semrock, Inc. verfügbar.

Günstig ist es, wenn die erste Beschichtung und/oder die zweite Beschichtung ausgebildet sind zum Reflektieren von elektromagnetischer Strahlung in einem Wellenlängenbereich von etwa 300 nm bis etwa 1700 nm. Ein derartiges optisches System lässt sich insbesondere als Verzögerungsstrecke oder Phasenschieber für Strahlungsfelder mit Wellenlängen im angegebenen Bereich nutzen.

Ferner kann es vorteilhaft sein, wenn zwischen der ersten Reflexionsfläche und der zweiten Reflexionsfläche eine elektrooptische Schicht oder ein elektrooptisches Element angeordnet oder ausgebildet ist. Eine elektrooptische Schicht oder ein elektrooptisches Element ermöglichen es, insbesondere durch Änderung eines Brechungsindexes aufgrund eines elektromagnetischen Feldes, eine Gruppengeschwindigkeit des Strahlungsfeldes beim Durchlaufen des elektrooptischen Elements oder der elektrooptischen Schicht gezielt zu ändern. Damit kann durch Aktivierung der elektrooptischen Schicht oder des elektrooptischen Elements eine Lichtweg verändert werden, mithin also eine Verzögerungsstrecke oder ein Phasenschieber ausgebildet werden, auch und insbesondere dann, wenn die erste Reflexionsfläche und die zweite Reflexionsfläche relativ zueinander unbeweglich angeordnet sind.

Auf einfache Weise lässt sich ein optisches System ausbilden, wenn die elektrooptische Schicht einen Flüssigkristall umfasst. Wird beispielsweise ein Raum zwischen den beiden Reflexionsflächen allseitig abgedichtet, kann in eine derart ausgebildete Aufnahme ein Flüssigkristall eingebracht werden.

Gemäß einer weiteren bevorzugten Ausführungsform der Erfindung kann vorgesehen sein, dass das optische System eine Strahlungsquelle zum Erzeugen eines elektromagnetischen Strahlungsfeldes umfasst. Beispielsweise kann es sich bei der Strahlungsquelle um einen Laser handeln.

Vorteilhaft ist es, wenn das elektromagnetische Strahlungsfeld unter einem Strahlungsfeldwinkel bezogen auf eine Flächennormale der ersten Reflexionsfläche oder der zweiten Reflexionsfläche auf die erste oder die zweite Beschichtung ausgerichtet ist. Auf diese Weise wird insbesondere eine Einkopplung des Strahlungsfeldes in einen Bereich zwischen den beiden Reflexionsflächen hinein erleichtert.

Die Handhabung des optischen Systems lässt sich weiter vereinfachen, wenn das Strahlungsfeld kollimiert ist. Insbesondere können hierfür ein oder mehrere Kollimationslinsen eingesetzt werden.

Die eingangs gestellte Aufgabe wird bei einem Messgerät der eingangs beschriebenen Art erfindungsgemäß dadurch gelöst, dass die Strahlungsdruckmesseinrichtung eines der oben beschriebenen optischen Systeme umfasst. Auf diese Weise kann das Strahlungsfeld mehrfach, und zwar je nachdem wie viele Umläufe zwischen den beiden Reflexionsflächen ermöglicht werden, auf eine Strahlungsdruckmesseinrichtung gelenkt werden. Dadurch können insbesondere auch kleinere Leistungen von Strahlungsfeldern, insbesondere kleine Laserleistungen in der Größenordnung von nur wenigen Watt, sicher und präzise gemessen werden.

Günstig ist es, wenn die Strahlungsdruckmesseinrichtung mindestens einen Druckmesssensor umfasst und wenn die erste Beschichtung oder die zweite Beschichtung unbeweglich mit dem mindestens einen Druckmesssensor gekoppelt oder auf diesem angeordnet oder gehalten ist. Das mehrfach reflektierte Strahlungsfeld trifft somit mehrfach auf den Druckmesssensor auf, so dass die durch das Strahlungsfeld ausgeübte Druckkraft entsprechend der Zahl der Umläufe vervielfacht wird. Damit lassen sich Strahlungsdruckkräfte deutlich präziser messen.

Vorteilhaft ist es, wenn die Strahlungsdruckmesseinrichtung eine Waage umfasst und wenn die Waage den mindestens einen Druckmesssensor umfasst. Eine der beiden Beschichtungen kann dann insbesondere an der Waage angeordnet oder ausgebildet sein, beispielsweise auf einem Wiegeteller der Waage. Beispielsweise kann auch ein Reflexionselement, welches eine der beiden Beschichtungen trägt oder umfasst, auf der Waage angeordnet werden.

Die eingangs gestellte Aufgabe wird ferner bei einer Absorptionsmesseinrichtung zum Messen der Absorption elektromagnetischer Strahlung in einer Probe erfindungsgemäß dadurch gelöst, dass die Absorptionsmesseinrichtung eines der oben beschriebenen optischen Systeme umfasst. Wird die Probenzelle insbesondere zwischen den beiden reflektierenden Beschichtungen angeordnet, kann so die Zahl der Durchläufe des Strahlungsfeldes durch die Probe entsprechend der Anzahl der Umläufe des Strahlungsfeldes zwischen den beiden reflektierenden Beschichtungen vervielfacht werden. So lässt sich auf kleinstem Raum eine Wechselwirkung zwischen dem Strahlungsfeld und der Probe vervielfachen.

Günstigerweise ist die Probenzelle zwischen der ersten Beschichtung und der zweiten Beschichtung angeordnet oder ausgebildet. Wie bereits erwähnt lässt sich so eine Wechselwirkung zwischen dem Strahlungsfeld und der Probe auf einfache Weise erhöhen.

Gemäß einer weiteren bevorzugten Ausführungsform der Erfindung kann vorgesehen sein, dass die Absorptionsmesseinrichtung eine Strahlungsquelle zum Erzeugen elektromagnetischer Strahlung und einen Detektor zum Detektieren elektromagnetischer Strahlung umfasst, wobei die Strahlungsquelle angeordnet ist zum Beaufschlagen der Probe mit Strahlung und wobei der Detektor angeordnet oder ausgebildet ist zum Messen der durch die Probe transmittierten Strahlung. In der beschriebenen Weise lässt sich also beispielsweise ein Absorptionsspektrometer ausbilden, welches vollständig autark betrieben und eingesetzt werden kann, um Absorptionen, insbesondere in hochverdünnten, zum Beispiel gasförmigen, Proben, zu messen.

Günstig ist es, wenn die Absorptionsmesseinrichtung eine Abbildungseinrichtung umfassend mindestens ein erstes Abbildungselement und mindestens ein zweites Abbildungselement umfasst, wobei die Probenzelle in einem Strahlengang zwischen dem mindestens einen ersten Abbildungselement und dem mindestens einen zweiten Abbildungselement angeordnet oder ausgebildet ist. So lässt sich insbesondere das Strahlungsfeld vor dem Durchstrahlen der Probe auf einfache Weise aufweiten, um mit einem möglichst großen räumlichen Bereich der Probe wechselwirken zu können. Zudem ermöglicht es die Abbildungseinrichtung insbesondere auch, einen Abstand zwischen den beiden Beschichtungen zu vergrößern, ohne die Funktion des optischen Systems zu beeinträchtigen.

Vorteilhaft ist es, wenn die Abbildungseinrichtung in Form einer 4f-Abbildungseinrichtung ausgebildet ist. Eine solche lässt sich insbesondere auf einfache Weise ausbilden und gestattet es, die beiden Beschichtungen des Systems hinreichend weit voneinander zu trennen, um auch großvolumige Proben mit dem Strahlungsfeld durchstrahlen zu können.

Die eingangs gestellte Aufgabe wird ferner bei einer Distanzmesseinrichtung der eingangs beschriebenen Art erfindungsgemäß dadurch gelöst, dass sie eines der oben beschriebenen optischen Systeme umfasst. Beispielsweise kann das optische System eingesetzt werden, um einen Verschiebeweg eines Spiegels des Interferometers hochpräzise zu bestimmen.

Günstig ist es dabei insbesondere, wenn das Interferometer einen beweglichen Spiegel umfasst und wenn der bewegliche Spiegel die erste Beschichtung oder die zweite Beschichtung umfasst oder trägt. Insbesondere kann der Spiegel das erste Reflexionselement oder das zweite Reflexionselement tragen oder umfassen. Wird der bewegliche Spiegel bewegt, ändert sich ein Abstand zwischen den beiden reflektierenden Beschichtungen in der bereits oben eingehend beschriebenen Weise, so dass sich durch Messung einer Verzögerung ein Verschiebeweg des Spiegels hochpräzise bestimmen lässt.

Die eingangs gestellte Aufgabe wird ferner bei einer Scanvorrichtung der eingangs beschriebenen Art erfindungsgemäß dadurch gelöst, dass die Ablenkeinrichtung eines der oben beschriebenen optischen Systeme umfasst. Die Ablenkeinrichtung kann insbesondere einen Spiegel umfassen, welcher durch das zweite Reflexionselement mit der zweiten Beschichtung ausgebildet wird. Vorzugsweise definieren die keilförmig gegeneinander geneigten Beschichtungen eine Symmetrieebene. Wird das optische System, insbesondere dessen beide Reflexionselemente um eine Schwenkachse verschwenkbar angeordnet, kann ein auf das optische System auftreffendes Strahlungsfeld umgelenkt werden. Die Schwenkachse verläuft vorzugsweise sowohl in der Symmetrieebene als auch in der zweiten Reflexionsflächenebene. Optional kann die Scanvorrichtung einen Schwenkantrieb umfassen, um das optische System definiert um die Schwenkachse zu verkippen, beispielsweise kontinuierlich. So lässt sich insbesondere das auf das optische System einfallende Strahlungsfeld räumlich vom ausfallenden Strahlungsfeld trennen. Dabei führt ein kleiner Schwenkwinkel um die Schwenkachse insbesondere dazu, dass ein Winkel zwischen dem einfallenden Strahlungsfeld und dem ausfallenden Strahlungsfeld vergrößert wird, und zwar proportional zur doppelten Anzahl der Umläufe des Strahlungsfeldes im Bereich zwischen den beiden Beschichtungen. Auf diese Weise lässt sich ein Strahlungsfeld sehr effizient durch eine kleine Änderung des Schwenkwinkels um ein Vielfaches ablenken, wodurch im Vergleich zu einer Ablenkeinrichtung, die lediglich einen einfachen Spiegel umfasst, deutlich höhere Scanraten erreicht werden können.

Ferner wird die Verwendung eines der oben beschriebenen optischen Systeme vorgeschlagen zum Ausbilden einer optischen Verzögerungsstrecke oder eines Phasenschiebers oder einer Absorptionsmesseinrichtung oder eines Messgeräts zum Messen einer Leistung eines elektromagnetischen Strahlungsfeldes oder eines Scanners oder einer Scanvorrichtung.

Die nachfolgende Beschreibung bevorzugter Ausführungsformen der Erfindung dient im Zusammenhang mit den Zeichnungen der näheren Erläuterung. Es zeigen:

Figur 1: eine schematische Darstellung eines Hauptstrahlverlaufs eines Strahlungsfeldes;

Figur 2: eine vergrößerte Nahansicht des in Figur 1 dargestellten, um 45° gedrehten Hauptstrahlverlaufs;

Figur 3: eine schematische Darstellung der Mehrfachreflexion in einem Bereich zwischen zwei Reflexionsflächen;

Figur 4: eine schematische Darstellung eines optischen Systems als Teil einer Distanzmesseinrichtung;

Figur 5: eine schematische Darstellung eines optischen Systems als Teil eines Messgeräts zum Messen einer Leistung eines elektromagnetischen Strahlungsfeldes mit einer Strahlungsdruckmesseinrichtung;

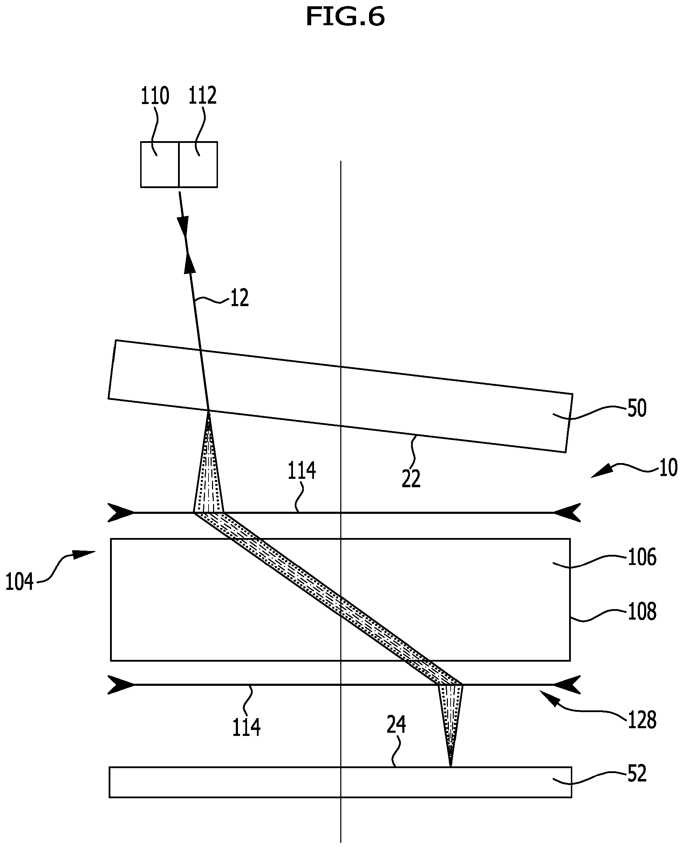

Figur 6: eine schematische Darstellung eines optischen Systems als Teil einer Absorptionsmesseinrichtung zum Messen der Absorption elektromagnetischer Strahlung in einer Probe;

Figur 7: eine schematische Darstellung eines optischen Systems umfassend eine elektrooptische Schicht im Bereich zwischen den reflektierenden Beschichtungen;

Figur 8: eine schematische Darstellung eines Hauptstrahlverlaufs eines Doppelpasses;

Figur 9: eine schematische Darstellung eines optischen Systems, welches relativ zum Strahlungsfeld verkippbar angeordnet oder ausgebildet ist;

Figur 10: eine schematische Darstellung der optischen Dichte der Beschichtung VersaChrome® TBP01-900/11 für Einfallswinkel von 0° und 60°;

Figur 11: eine schematische Darstellung eines optischen Systems mit zu flach auftreffendem Strahlungsfeld, so dass dieses nicht zwischen die beiden Reflexionsflächen eindringen kann;

Figur 12: eine schematische Darstellung ähnlich Figur 11 für ein Strahlungsfeld, welches mit einem zu steilen Einfallswinkel auf die erste Beschichtung auftrifft, so dass das Strahlungsfeld nicht zwischen die beiden Reflexionsflächen eindringen kann;

Figur 13: eine schematische Anordnung einer Distanzmesseinrichtung umfassend ein Interferometer;

Figur 14: eine schematische Darstellung der optischen Dichte bei 0° und 30° in Abhängigkeit der Wellenlänge für eine Beschichtung vom Typ LP02-1064RE der Semrock, Inc.;

Figur 15: eine schematische Darstellung eines weiteren Ausführungsbeispiels eines optischen Systems zur Ausbildung eines Mikrophons;

Figur 16: eine schematische Darstellung eines weiteren Ausführungsbeispiels eines optischen Systems zur Ausbildung eines Mikrophons; und

Figur 17: eine schematische Darstellung eines weiteren Ausführungsbeispiels eines optischen Systems zur Ausbildung eines Beschleunigungssensors.

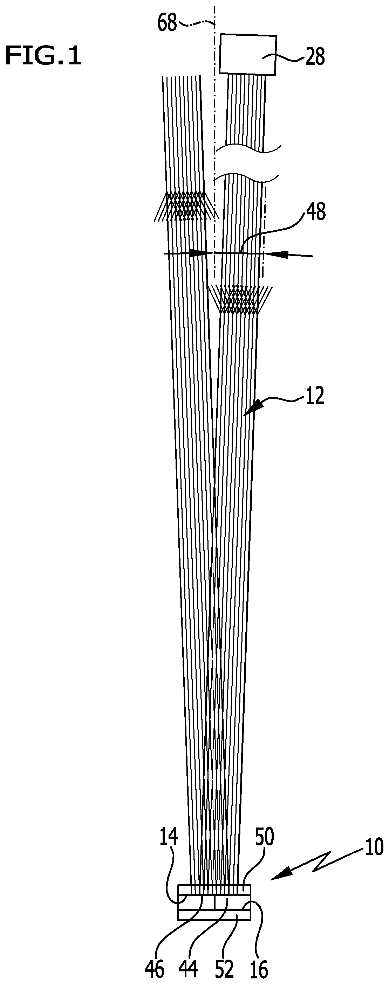

Figur 1 zeigt schematisch ein erstes Ausführungsbeispiel eines insgesamt mit dem Bezugszeichen 10 bezeichneten optischen Systems zum mehrfachen Umlenken eines elektromagnetischen Strahlungsfeldes 12.

Das System 10 umfasst eine erste Reflexionsfläche 14 und eine zweite Reflexionsfläche 16.

Die erste Reflexionsfläche 14 definiert eine erste Reflexionsflächenebene 18. Die zweite Reflexionsfläche 16 definiert eine zweite Reflexionsflächenebene 20.

Die erste Reflexionsfläche 14 umfasst eine erste, elektromagnetische Strahlung reflektierende Beschichtung 22. Die zweite Reflexionsfläche 16 umfasst eine zweite, elektromagnetische Strahlung reflektierende Beschichtung 24.

Die erste Reflexionsfläche 14 und die zweite Reflexionsfläche 16 sind voneinander beabstandet angeordnet.

Die erste Reflexionsflächenebene 18 und die zweite Reflexionsflächenebene 20 sind zudem gegeneinander geneigt angeordnet und schließen einen Neigungswinkel 26 ein.

Zum Erzeugen des Strahlungsfeldes 12 kann das optische System 10 optional eine Strahlungsquelle 28 umfassen. Beispielsweise kann die Strahlungsquelle 28 in Form eines Lasers ausgebildet sein, beispielsweise in Form einer Laserdiode, eines Scheibenlasers oder eines Faserlasers.

Die erste Beschichtung 22 und die zweite Beschichtung 24 sind in Form reflektierender Beschichtungen ausgebildet. Diese können auf unterschiedliche Arten ausgebildet sein. Beispielsweise können sie wellenlängenunabhängig hochreflektierend ausgebildet sein oder wellenlängen- und einfallswinkelabhängig hochreflektierend. Mögliche Varianten werden nachfolgend noch im Einzelnen erläutert.

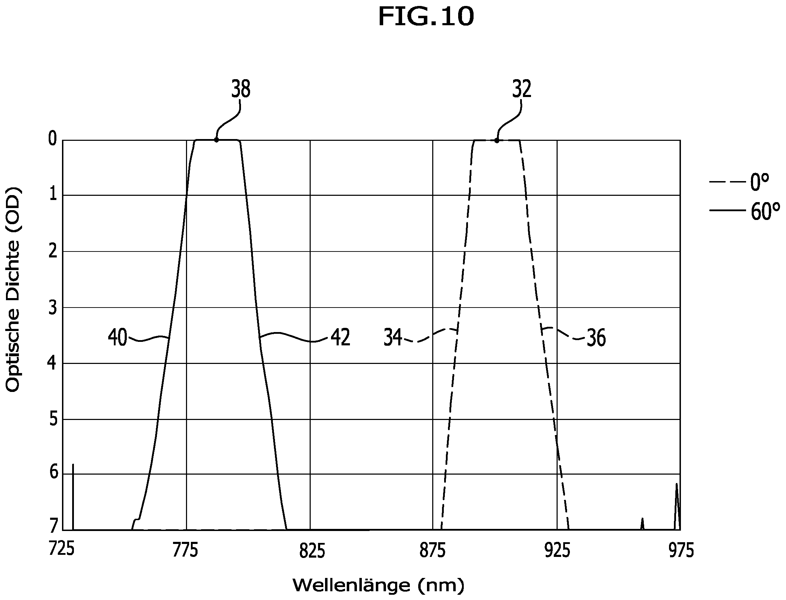

Die erste Beschichtung 22 bildet einen einfachen Bandpassfilter 30. Dessen Eigenschaften sind schematisch in Figur 10 dargestellt. So ist für den Bandpassfilter 30 ein Verlauf der optischen Dichte der ersten Beschichtung 22 für einen Einfallswinkel von 0° sowie für einen Einfallswinkel von 60° schematisch dargestellt. Demnach kann elektromagnetische Strahlung in einem Durchlässigkeitsbereich 32 für Wellenlängen von etwa 890 nm bis etwa 910 nm die erste Beschichtung 22 durchdringen. Eine optische Dichte der ersten Beschichtung 22 beträgt für eine senkrecht auf die erste Beschichtung 22 auftreffende Strahlung Null im angegebenen Wellenlängenbereich.

Mit abnehmender Wellenlänge erhöht sich eine optische Dichte der ersten Beschichtung 22, mit zunehmender Wellenlänge über 910 nm erhöht sich die optische Dichte der ersten Beschichtung 22 ebenfalls. Sowohl eine kurzwellige Flanke 34 als auch eine langwellige Flanke 36 des Verlaufs der optischen Dichte der Beschichtung weist eine Flankensteilheit von etwa 2 OD/3 nm auf.

Trifft auf die erste Beschichtung 22 elektromagnetische Strahlung unter einem Winkel von 60° ergibt sich der in Figur 10 links dargestellte Verlauf der optischen Dichte in Abhängigkeit der Wellenlänge. Hier ergibt sich beispielhaft ein Durchlässigkeitsbereich 38 von etwa 775 nm bis etwa 795 nm mit einer optischen Dichte von 0. Auch hier fallen eine kurzwellige Flanke 40 und eine langwellige Flanke 42 mit einer Steilheit von etwa 2 OD/3 nm ab.

Die in Verbindung mit Figur 10 beispielhaft erläuterte Eigenschaft der ersten Beschichtung 22 ermöglicht es also insbesondere, elektromagnetische Strahlung einer bestimmten Wellenlänge unter einem vorgegebenen Einfallswinkel in einen Bereich 44 zwischen den beiden Reflexionsflächen 14 und 16 einzukoppeln. Dies kann beispielswiese bei einer Wellenlänge von 780 nm und einem Winkel von 60° erfolgen für eine erste Beschichtung 22, mit den in Figur 10 dargestellten Durchlässigkeitseigenschaften.

Wird der Winkel, unter dem elektromagnetische Strahlung mit einer Wellenlänge von 780 nm auf die erste Beschichtung 22 auftrifft, kleiner oder größer, nimmt die optische Dichte der ersten Beschichtung 22 sowohl für kleinere als auch für größere Winkel ab. Trifft die Strahlung also nach dem Durchstrahlen der ersten Beschichtung 22 und nach Reflexion an der zweiten Beschichtung 24 unter einem anderen Winkel auf die erste Beschichtung 22, kann aufgrund der besonderen Eigenschaften der ersten Beschichtung 22 die Bedingung erfüllt sein, dass die in den Bereich 44 eingetretene elektromagnetische Strahlung die Durchlässigkeitsbedingung für den Einfallswinkel, mit dem die Strahlung auf die erste Beschichtung 22 zum zweiten Mal auftrifft, nicht mehr erfüllt. Ist die optische Dichte für die Strahlung unter dem neuen Einfallswinkel größer als 0, wird die Strahlung an der ersten Beschichtung 22 mindestens teilweise reflektiert.

Diese Änderung des Auftreffwinkels der Strahlung auf die erste Beschichtung 22 nach einem Hin- und Rücklauf der Strahlung durch den Bereich 44 ergibt sich aufgrund der relativ zueinander geneigten Reflexionsflächen 14 und 16. Aufgrund des Reflexionsgesetzes wird nach jedem doppelten Durchlauf durch den Bereich 44 der Winkel, unter dem die Strahlung auf die erste Beschichtung 22 auftrifft, um das Doppelte des Neigungswinkels 26 verringert.

Damit ergibt sich, dass die erste Beschichtung 22 insgesamt eine optische Einkoppelöffnung 46 für das Strahlungsfeld 12 bildet, und zwar abhängig von deren Wellenlänge und einem Einfallswinkel, unter dem das Strahlungsfeld auf die erste Beschichtung 22 zum ersten Mal auftrifft. Ergibt sich nach einem Hin- und Rücklauf durch den Bereich 44, bei dem die Strahlung an der zweiten Beschichtung 24 vollständig zurückreflektiert wird, die beschriebene Bedingung, dass für die jeweilige Wellenlänge eine optische Dichte der ersten Beschichtung 22 für den um das Doppelte des Neigungswinkels 26 geänderten Auftreffwinkel der Strahlung auf die erste Beschichtung 22 erfüllt ist, wird die Strahlung an der ersten Beschichtung mit zunehmenden Anteilen reflektiert und durchläuft so den Bereich 44 mehrfach.

Die Anzahl der Durchläufe oder Umläufe im Bereich 44 hängt also sowohl vom Neigungswinkel 26 als auch vom Einfallswinkel 48 der Strahlung auf die erste Beschichtung 22 ab.

Das in Figur 1 dargestellte Ausführungsbeispiel des optischen Systems 10 umfasst ein erstes Reflexionselement 50 und ein zweites Reflexionselement 52. Diese bilden jeweils einen Träger für die erste Beschichtung 22 beziehungsweise die zweite Beschichtung 24.

Das erste Reflexionselement definiert mit einer Seitenfläche die erste Reflexionsfläche 14, das zweite Reflexionselement 52 mit einer Seitenfläche die zweite Reflexionsfläche 16. Die Reflexionselemente 50 und 52 sind derart angeordnet, dass die Reflexionsflächen 14 und 16 aufeinander zu weisend angeordnet sind.

Das erste Reflexionselement 50 und das zweite Reflexionselement 52 sind in Form von für elektromagnetische Strahlung durchlässigen Festkörpern ausgebildet. Dies ermöglicht es insbesondere, das Strahlungsfeld 12, wie schematisch in Figur 1 dargestellt, durch das erste Reflexionselement 50 hindurch auf die erste Beschichtung 22 zu leiten.

Alternativ kann das zweite Reflexionselement 52 aus einem für elektromagnetische Strahlung undurchlässigen Material ausgebildet sein. Insbesondere kann auf der zweiten Reflexionsfläche 16 keine Einkoppelöffnung vorgesehen sein, so dass das Strahlungsfeld 12 ausschließlich durch die Einkoppelöffnung 46, die durch die erste Beschichtung 22 gebildet wird, in den Bereich 44 zwischen die beiden Beschichtungen 22 und 24 eingekoppelt werden kann.

Das erste Reflexionselement 50 ist vorzugsweise aus einem Kristall oder aus Glas ausgebildet. Beispielsweise kann der Kristall Yttrium-Aluminium-Granat oder Saphir oder ein Halbleiterkristall sein.

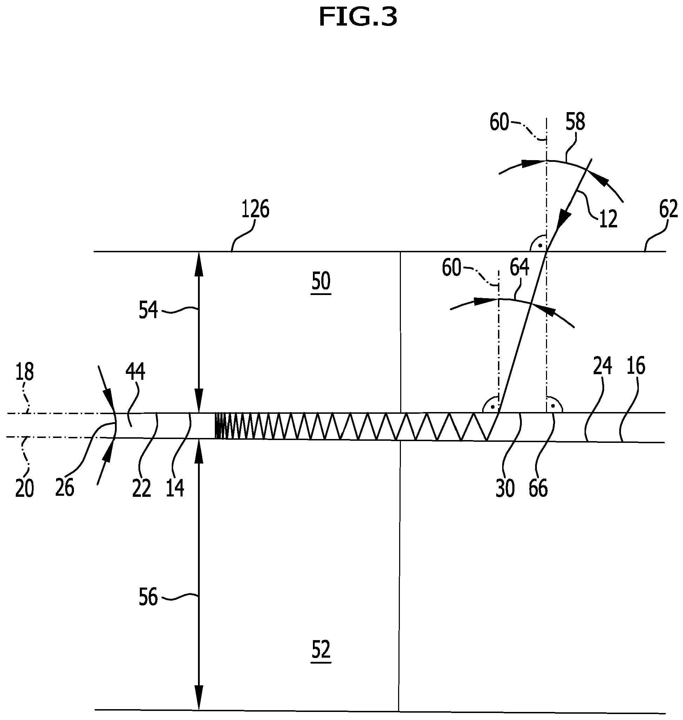

Eine Dicke 54 beziehungsweise 56 der Reflexionselemente 50 und 52 liegt vorzugsweise in einem Bereich von etwa 1 mm bis etwa 10 mm. Bei dem in Figur 3 schematisch dargestellten Ausführungsbeispiel betragen die Dicken 54 und 56 etwa 2,5 mm beziehungsweise etwa 4 mm.

Die in den Figuren beispielhaft dargestellten Reflexionselemente 50 und 52 sind scheibenförmig ausgebildet. Alternativ können sie auch quaderförmig ausgebildet sein.

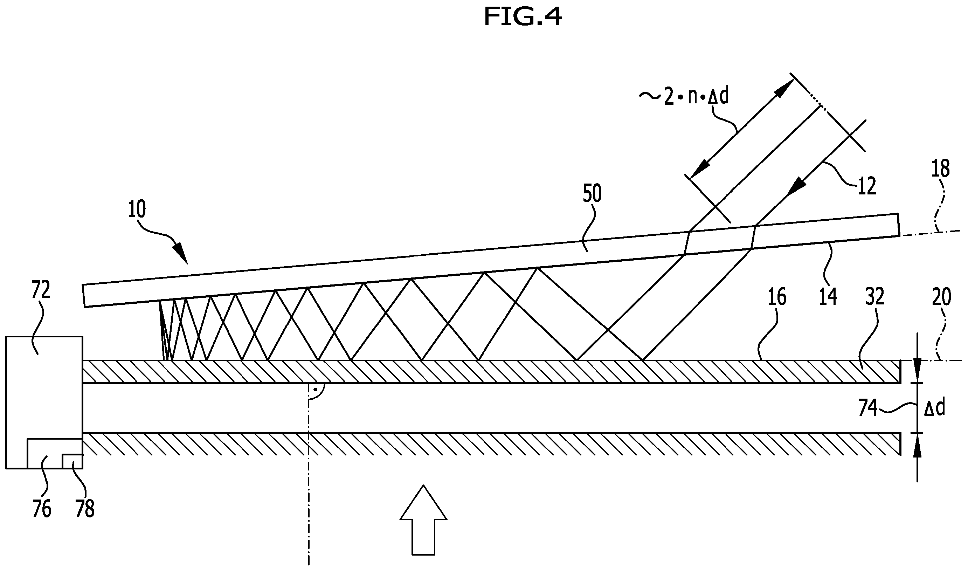

Das Einkoppeln eines Strahlungsfeldes 12 in den Bereich 44 zwischen die Beschichtungen 22 und 24 ist beispielhaft in Figur 4 dargestellt.

Das Strahlungsfeld 12 trifft unter einem Strahlungsfeldwinkel 58 bezogen auf eine Flächennormale 60 zu einer Oberseite 62 auf das erste Reflexionselement 50. Im optisch dichteren ersten Reflexionselement 50 wird das Strahlungsfeld 12 gemäß den Gesetzen der Optik zur Flächennormale 60 hin gebrochen, so dass das Strahlungsfeld 12 unter einem Einfallswinkel 64, welcher kleiner als der Strahlungsfeldwinkel 58 ist, auf die erste Beschichtung 22 trifft.

Beispielhaft beträgt eine Wellenlänge des Strahlungsfeldes 12 780 nm. Der Neigungswinkel 26 beträgt 1°. Die erste Beschichtung 22 ist gebildet durch die Beschichtung eines VersaChrome®-Filters der Firma Semrock, Inc. mit der Bezeichnung TBP01-900/11.

Ein Verkippungsverhalten dieser Beschichtung lässt sich in bekannter Weise gemäß der nachfolgenden Formel berechnen:

$$\lambda(\theta) = \lambda(0)\sqrt{1 - \frac{\sin^2(\theta)}{n_{eff}^2}}$$

Dabei ist $\lambda(\theta)$ die Wellenlänge bei einem gegebenen Einfallswinkel, wobei 0° einem senkrechten Einfallswinkel auf die Beschichtung entspricht, und $n_{eff}$ der effektive Brechungsindex der Beschichtung 22 ist. $\Theta$ ist der Einfallswinkel 64 bezogen auf die Flächennormale 60.

Das Strahlungsfeld 12 tritt durch die Beschichtung 22 in den Bereich 44 ein und wird an der hochreflektierend ausgebildeten zweiten Beschichtung 24 vollständig reflektiert.

Trifft das Strahlungsfeld 12 unter dem Einfallswinkel 64 von 60° wieder auf die erste Beschichtung 22, trifft es nach Rückreflexion an der zweiten Beschichtung 24 unter einem Winkel von 60°-2°=58° wieder auf die erste Beschichtung 22 auf und wird an dieser zu großen Teilen in Richtung auf die zweite Beschichtung 24 zurückreflektiert.

Unter Berücksichtigung des Neigungswinkels 26 sowie des Einfallswinkels 64 ergeben sich insgesamt 33 Doppelreflexionen des Strahlungsfeldes 12 im Bereich 44.

Unter Berücksichtigung des abnehmenden Auftreffwinkels des Strahlungsfeldes 12 nach jeder Reflexion an der zweiten Beschichtung 24 auf die erste Beschichtung 22, läuft das Strahlungsfeld 12 praktisch auf demselben Weg wieder zurück und tritt dann nahezu an derselben Stelle wieder aus dem Bereich 44 aus.

In Figur 3 sind schematisch die optischen Dichten der ersten Beschichtung 22 nach den ersten sechs Rückreflexionen an der zweiten Beschichtung 24 angegeben.

Die zweite Beschichtung 24 ist hochreflektierend ausgebildet, und zwar unabhängig von der Wellenlänge und dem Einfallswinkel.

Bei geeigneten Beschichtungen können grundsätzlich Strahlungsfelder 12 mit beliebigen Wellenlängen im Bereich 44 in der beschriebenen Weise eingefangen werden.

Als erste Beschichtung 22 kann insbesondere auch die bereits erwähnte Beschichtung der Firma Semrock, Inc. mit der Bezeichnung LP02-1064RE zum Einsatz kommen. Diese Beschichtung bildet einen Langpasskantenfilter, der lange Wellenlängen transmittiert.

Ein mittlerer Abstand zwischen den beiden Reflexionsflächen 14 und 16 liegt vorzugsweise in einem Bereich von etwa 200 $\mu$m bis etwa 2000 $\mu$m. Eine Wellenlänge des Strahlungsfeldes kann beispielsweise 941 nm betragen. Das Strahlungsfeld 12 kann insbesondere P-polarisiert sein.

Wird der Strahlungsfeldwinkel 58 so gewählt, dass der Einfallswinkel 64 48° beträgt, ergeben sich für das Strahlungsfeld insgesamt 48 Umläufe im Bereich 44.

Die Beschichtung LP02-1064RE hat gegenüber der Beschichtung TBP01-900/11 den Vorteil, dass sich eine Transmittivität der Beschichtung bereits nach einem Umlauf um mehrere optische Dichten verringert, so dass Sekundärstrahlen keine nennenswerten Verlustquellen oder Störquellen darstellen und dadurch eine Energie des Strahlungsfeldes 12 nur um einige Prozent reduziert wird.

Um die Zahl an Umläufen weiter zu erhöhen, muss der Neigungswinkel 26 verringert werden. Eine Voraussetzung für das Erreichen der genannten Umlaufzahlenverlustwerte ist insbesondere die P-Polarisation des Strahlungsfeldes 12.

Um dem beschriebenen direkten Rücklauf des Strahlungsfeldes 12 entgegenzuwirken, besteht die Möglichkeit, das optische System 10 relativ zum Strahlungsfeld 12 leicht zu verdrehen, also das Strahlungsfeld 12 unter dem Einfallswinkel 48 bezogen auf eine zur Oberseite 62 und damit auch zu einer die erste Beschichtung 22 tragenden Unterseite 66 des ersten Reflexionselements 50 senkrecht verlaufenden Symmetrieebene 68 zu verdrehen.

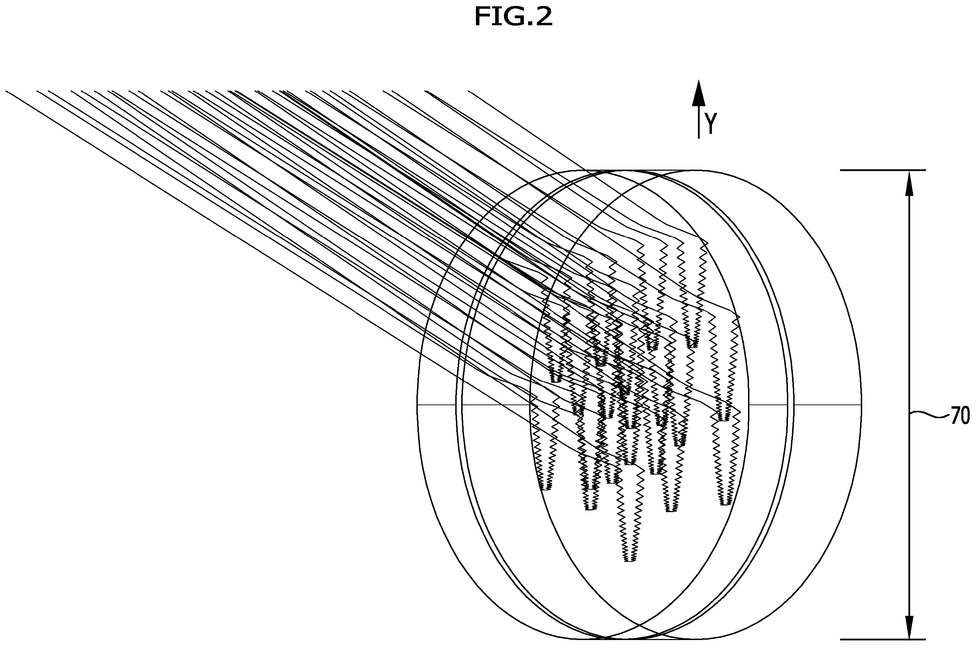

Für scheibenförmige Reflexionselemente 50 und 52 mit einem Durchmesser 70 und einem Neigungswinkel 26 von 1° und einem Einfallswinkel 48 von 5° ergibt sich ein Verlauf des Strahlungsfeldes 12, wie er schematisch in den Figuren 1 und 2 dargestellt ist. In diesen beiden Figuren sind lediglich beispielhaft Strahlen dargestellt, die 98% der Strahlungsleistung des Strahlungsfeldes 12 überschreiten.

Figur 1 zeigt den Strahlengang in einer Ansicht aus Y-Richtung.

In Figur 2 ist beispielhaft eine Nahansicht des ersten Reflexionselements 50 dargestellt, die um 45° bezogen auf die Y-Achse verdreht ist.

In Figur 2 ist deutlich erkennbar, dass das aus dem Bereich 44 austretenden Strahlungsfeld einen kleinen Winkel mit dem einfallenden Strahlungsfeld 12 einschließt und so räumlich einfach getrennt werden kann.

Ein Verlauf des Strahlungsfeldes 12 im keilförmigen Bereich 44 zwischen den Beschichtungen 22 und 24 ist in Figur 2 schematisch dargestellt. Der Verlauf folgt hier einem Bogen, so dass das Strahlungsfeld 12 unter einem anderen Winkel wieder aus dem Bereich 44 austritt.

Die Anzahl der Reflexionen ist im Wesentlichen unabhängig von einer Position des Strahlungsfeldes 12 auf dem ersten Reflexionselement 50. Lediglich eine Größe des bogenförmigen Verlaufs und damit des Lichtwegs wird durch die jeweils lokale Dicke des Bereichs 44 bestimmt, also durch einen Abstand zwischen den beiden Beschichtungen 22 und 24.

Das optische System 10 lässt sich insbesondere verwenden, um eine Verzögerungsstrecke für das Strahlungsfeld 12 zu bilden. Der oben im Zusammenhang mit den Figuren 2 und 3 beschriebene Lichtweg im Bereich 44 lässt sich verändern und damit eine Länge einer durch das optische System 10 definierten Verzögerungsstrecke, wenn die Beschichtungen 22 und 24 relativ zueinander beweglich angeordnet sind. Dies ist beispielhaft in Figur 4 dargestellt. Hier ist das zweite Reflexionselement 52 parallel zu sich selbst verschiebbar angeordnet.

Zum Bewegen des zweiten Reflexionselements 52 dient eine Abstandsänderungseinrichtung 72, mit welcher die Reflexionselemente 50 und 52 aufeinander zu und voneinander weg bewegt werden können. Mit der Abstandsänderungseinrichtung lässt sich ein Abstand zwischen den Reflexionsflächen 14 und 16 verändern.

In Figur 4 ist ein Ausführungsbeispiel dargestellt, bei dem die Abstandsänderungseinrichtung 72 ausgebildet ist zum Verschieben der zweiten Reflexionsfläche 16, nämlich durch Verschieben des zweiten Reflexionselements 52, senkrecht zur zweiten Reflexionsflächenebene 20. Alternativ oder zusätzlich kann die Abstandsänderungseinrichtung 72 auch derart ausgebildet sein, dass mit ihr die erste Reflexionsfläche 14, beispielsweise durch Verschieben des ersten Reflexionselements 50, senkrecht zur ersten Reflexionsflächenebene bewegt werden kann.

Die Verzögerungsstrecke beziehungsweise ein Lichtweg des Strahlungsfeldes 12 im Bereich 44 lässt sich durch Ändern einer Position des zweiten Reflexionselements 52 wie folgt verändern. Wird das zweite Reflexionselement 52 parallel zu sich selbst um einen Verschiebeweg 74 von $\Delta d$ verschoben, ändert sich die Länge des Lichtwegs im Bereich 44 proportional zu $n \cdot \Delta d$, wobei $n$ die Zahl der Hin- und Rückreflexionen innerhalb des Bereichs 44 angibt.

Ein derartiges optisches System 10 ermöglicht es also insbesondere, durch einen kleinen Verschiebeweg 74 eine Verlängerung des Lichtwegs um ein Vielfaches dieses Verschiebewegs 74 zu erreichen.

Umfasst die Abstandsänderungseinrichtung 72 eine Antriebseinrichtung 76, beispielsweise in Form eines elektromagnetischen oder piezomechanischen Antriebs, zum Beispiel in Form eines Piezoaktuators 78, kann eine Anpassung beziehungsweise Veränderung des Lichtwegs mit großer Geschwindigkeit erfolgen.

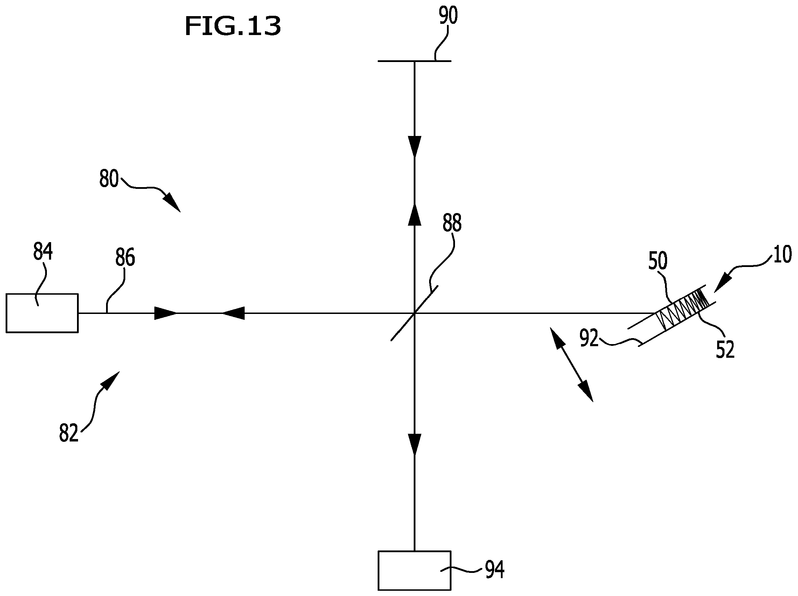

Mit einem wie in Figur 4 dargestellten optischen System 10 lässt sich insbesondere eine Distanzmesseinrichtung 80 ausbilden, wie sie schematisch in Figur 13 dargestellt ist. Sie umfasst ein herkömmliches Interferometer 82 mit einer Strahlungsquelle 84 zum Erzeugen eines Strahlungsfeldes 86, das auf einen Strahlteiler 88 geleitet wird. Hier wird das Strahlungsfeld 86 aufgeteilt und auf einen unbeweglichen Spiegel 90 sowie auf einen beweglichen Spiegel 92 aufgeteilt. Die beiden durch Teilung am Strahlteiler 88 gebildeten Anteile des Strahlungsfeldes 86 treffen nach Reflexion an den Spiegeln 90 und 92 wieder auf den Strahlteiler 88 und werden mindestens teilweise auf einen Detektor 94 gelenkt. Mit diesem lässt sich die überlagerte Intensität der Anteile des Strahlungsfeldes 86 messen.

Das optische System 10 der Distanzmesseinrichtung 80 umfasst ein erstes, unbeweglich angeordnetes Reflexionselement 50 und ein zweites Reflexionselement 52. Das erste Reflexionselement 50 ist im Strahlengang zwischen dem Strahlteiler 88 und dem beweglichen Spiegel 92 angeordnet. Der bewegliche Spiegel 92 bildet dabei das zweite Reflexionselement 52. Dessen dem ersten Reflexionselement 50 zugewandte zweite Reflexionsfläche 16 ist mit einer hochreflektierenden Beschichtung versehen, mit der das Strahlungsfeld 86 nach Durchtritt durch das erste Reflexionselement 50 zurück reflektiert wird.

Die erste Reflexionsfläche 14 ist mit der ersten Beschichtung 22 versehen, die in der oben beschriebenen Weise eine wellenlängen- und winkelabhängige optische Einkoppelöffnung 46 bildet. Auf diese Weise wird wiederum eine Verzögerungsstrecke zwischen den beiden Beschichtungen 22 und 24 des optischen Systems ausgebildet.

Wird der bewegliche Spiegel 92 um einen Verschiebeweg 74 verschoben, ändert sich die Verzögerungsstrecke des optischen Systems 10 um ein Vielfaches dieses Verschiebewegs 74. So kann durch eine kleine Verschiebung des beweglichen Spiegels 92, insbesondere mit einem schnellen Antrieb, beispielsweise mit einem Piezoaktuator, das Interferometer durchgestimmt werden. Dies kann dadurch insbesondere sehr schnell und präzise geschehen.

Eine weitere Anwendung des optischen Systems 10 ist bei einem Messgerät 96 zum Messen einer Leistung des elektromagnetischen Strahlungsfeldes 12 möglich. Das Messgerät 96 umfasst eine Strahlungsdruckmesseinrichtung 98 in Form einer Waage 100.

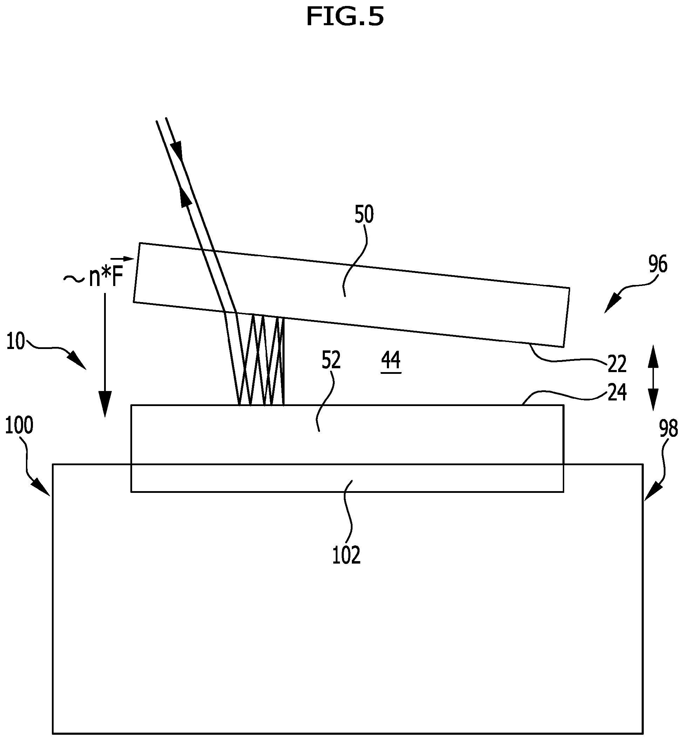

Die Waage 100 umfasst einen Druckmesssensor 102. Die erste Beschichtung 22 und die zweite Beschichtung 24 sind wiederum beweglich relativ zueinander angeordnet. Bei dem in Figur 5 dargestellten Ausführungsbeispiel ist die zweite Beschichtung 24 unbeweglich mit dem Druckmesssensor 102 gekoppelt beziehungsweise auf diesem angeordnet oder gehalten. Dies wird erreicht dadurch, dass das zweite Reflexionselement 52, welches die zweite Beschichtung 24 trägt, direkt mit dem Druckmesssensor 102 gekoppelt ist.

Das Messgerät 96 funktioniert grundsätzlich nach dem Prinzip, dass das Strahlungsfeld 12 in Folge einer Reflexion eine Kraft auf die Fläche, an der es reflektiert wird, ausübt. Allerdings sind diese vom Strahlungsfeld 12 ausgeübten Druckkräfte sehr klein. Das optische System 10 ermöglicht nun eine Vervielfachung der wirkenden Strahlungsdruckkraft F um einen Faktor n, welcher der Anzahl der Hin- und Rückreflexionen im Bereich 44 zwischen den beiden Beschichtungen 22 und 24 entspricht. Auf diese Weise lassen sich beispielsweise auch sehr kleine Leistungen von Strahlungsfeldern 12 messen, auch wenn diese beispielsweise nur wenige Watt betragen.

Ein optisches System 10 kann beispielsweise auch genutzt werden, um eine Absorptionsmesseinrichtung 104 zum Messen der Absorption elektromagnetischer Strahlung in einer Probe 106 auszubilden.

Die Absorptionsmesseinrichtung 104 umfasst eine Probenzelle 108 zum Aufnehmen der Probe 106. Bei der Probe 106 handelt es sich insbesondere um eine gasförmige Probe, so dass sich bei einem einfachen Durchgang des Strahlungsfeldes 12 durch die Probe 106 nur eine geringe Wechselwirkung zwischen dem Strahlungsfeld 12 und der Probe 106 ergibt.

Umfasst die Absorptionsmesseinrichtung 104 ein optisches System 10, so kann die Probenzelle 108 zwischen der ersten Beschichtung 22 und der zweiten Beschichtung 24 angeordnet oder ausgebildet werden.

Die Absorptionsmesseinrichtung 104 umfasst eine Strahlungsquelle 110 zum Erzeugen elektromagnetischer Strahlung und einen Detektor 112 zum Detektieren elektromagnetischer Strahlung.

Die Strahlungsquelle 110 ist angeordnet zum Beaufschlagen der Probe 106 mit Strahlung. Der Detektor 112 ist angeordnet zum Messen der durch die Probe 106 transmittierten Strahlung.

Das optische System 10 ist, wie schematisch in den Figuren 1 und 2 dargestellt und oben beschrieben, zur Einfallsrichtung des Strahlungsfeldes 12 etwas verkippt, so dass sich die einfallende Strahlung und die aus dem optischen System 10 wieder austretende Strahlung nicht direkt überlagern, sondern räumlich voneinander getrennt sind.

Werden in den Strahlengang zwischen die Beschichtungen 22 und 24 noch zwei Linsen 114 eingesetzt, kann durch diese Linsen 114 das Strahlungsfeld 12 vor dem Durchtreten durch die Probe 106 beispielsweise mit einer 4f-Abbildung aufgeweitet werden. Die Linsen 114 bilden zusammen eine Abbildungseinrichtung 128, die auch noch weitere optische Elemente wie Linsen, Prismen, Spiegel oder Gitter umfassen kann. So kann insgesamt eine großaperturige und dennoch kompakte Absorptionsmesseinrichtung 104 ausgebildet werden.

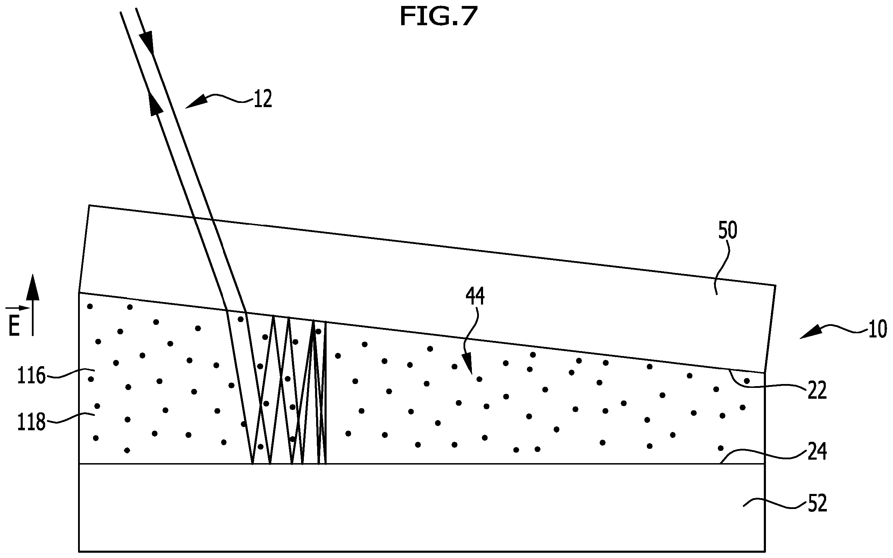

Eine weitere Variante eines optischen Systems 10 ist schematisch in Figur 7 dargestellt. Bei diesem ist zwischen der ersten Reflexionsfläche 14 und der zweiten Reflexionsfläche 16 eine elektrooptische Schicht 116 oder ein elektrooptisches Element angeordnet oder ausgebildet. Beispielsweise kann die elektrooptische Schicht 116 einen Flüssigkristall 118 umfassen.

Durch Anlegen eines elektrischen Feldes lässt sich der Brechungsindex der elektrooptischen Schicht 116 verändern und damit eine Gruppengeschwindigkeit des Strahlungsfeldes 12 in der elektrooptischen Schicht 116. Sind die beiden Beschichtungen 22 und 24 relativ zueinander unbeweglich angeordnet, lässt sich so durch Verändern des Brechungsindexes der elektrooptischen Schicht 116 bei konstantem Lichtweg die Umlaufzeit des Strahlungsfeldes 12 im Bereich 44 zwischen den Beschichtungen 22 und 24 ändern.

Ein solches optisches System lässt sich ebenfalls als Verzögerungsstrecke einsetzen.

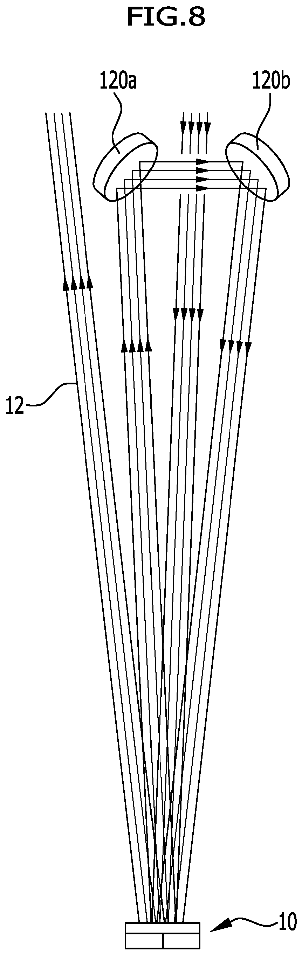

Sollen weitere Umläufe durch das optische System 10 erfolgen, kann beispielsweise das Strahlungsfeld 12 über zusätzliche Spiegel 120a und 120b erneut auf das optische System 10 umgelenkt werden. Dies ist schematisch in Figur 8 dargestellt. So lässt sich die Zahl der Hin- und Rückreflexionen im Bereich 44 des optischen Systems 10 auf einfache Weise verdoppeln.

Abhängig von der Eigenschaft der Beschichtungen 22 und 24 kann auch noch mit weiteren Spiegeln die Zahl der Umläufe des Strahlungsfeldes 12 im Bereich 44 weiter vergrößert werden.

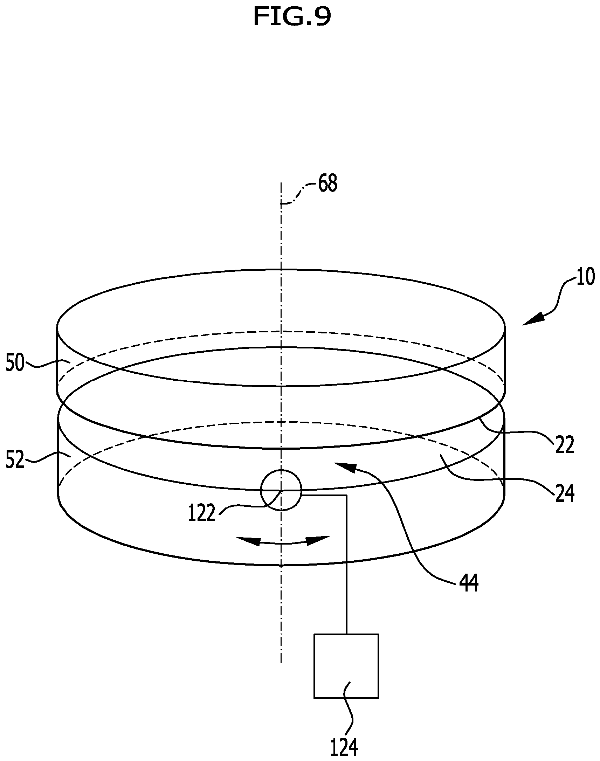

Figur 9 zeigt eine weitere Variante eines optischen Systems 10. Die keilförmige Anordnung der Beschichtungen 22 und 24 ist symmetrisch zur Symmetrieebene 68 ausgerichtet.

Die Gesamtanordnung der beiden Reflexionselemente 50 und 52, die die Beschichtungen 22 und 24 tragen, ist um eine Schwenkachse 122, verschwenkbar.

Die Schwenkachse 122 verläuft sowohl in der Symmetrieebene 68 als auch in der zweiten Reflexionsflächenebene 20.

Optional kann ein Schwenkantrieb 124 vorgesehen sein, um das optische System 10 um die Schwenkachse 122 definiert zu verkippen, beispielsweise kontinuierlich. Auf diese Weise lässt sich eine Scanvorrichtung ausbilden, mit der das auf das optische System 10 einfallende Strahlungsfeld 12 räumlich vom ausfallenden Strahlungsfeld 12 getrennt werden kann. Dabei führt ein kleiner Schwenkwinkel um die Schwenkachse 122 dazu, dass der Winkel zwischen dem einfallenden Strahlungsfeld 12 und dem ausfallenden Strahlungsfeld 12 vergrößert wird, und zwar proportional zur doppelten Anzahl der Umläufe des Strahlungsfeldes im Bereich 44. Auf diese Weise lässt sich ein Strahlungsfeld sehr effizient durch eine kleine Änderung des Schwenkwinkels um ein Vielfaches ablenken, wodurch höhere Scanraten erreicht werden können.

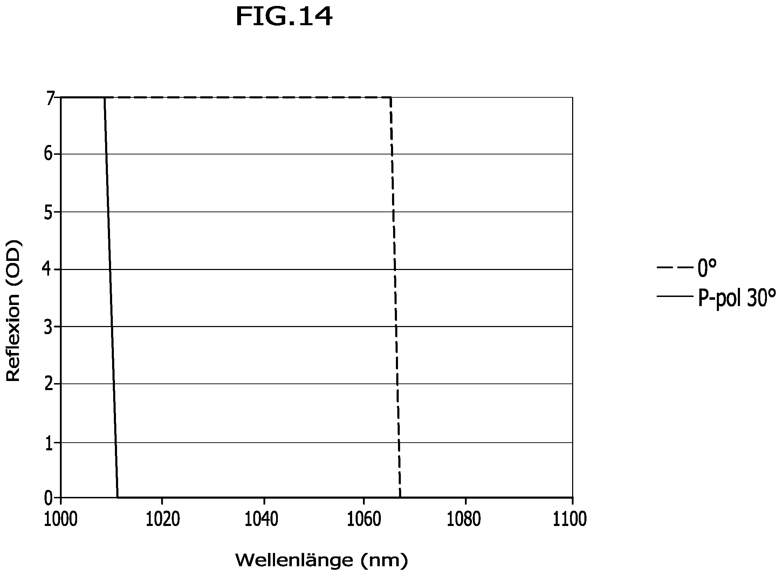

Figur 14 zeigt die Darstellung der optischen Dichte einer ersten Beschichtung 22 vom Typ LP02-1064RE der Semrock, Inc.. Auch hier kann das Verkippungsverhalten mit der von der Semrock, Inc. angegebenen Formel

$$\lambda(\theta) = \lambda(0)\sqrt{1 - \frac{\sin^2(\theta)}{n_{eff}^2}}$$

beschrieben werden, wobei wiederum $\lambda(\theta)$ die Wellenlänge bei einem gegebenen Einfallswinkel und $n_{eff}$ der effektive Brechungsindex der Beschichtung ist. Ein Einfallswinkel von 0° entspricht einem senkrechten Einfall auf die Beschichtung 22.

Es ist gut zu erkennen, dass die optische Dichte der Beschichtung bei senkrechtem Einfall, also bei einem Einfallswinkel 64 von 0°, mit einer Wellenlänge von etwa 1010 nm einer optischen Dichte von 7 entspricht und mit zunehmender Wellenlänge steil auf eine optische Dichte von 0 abfällt. Bei einem Einfallswinkel von 30° ergibt sich für P-polarisierte Strahlung ein Verlauf, bei dem die optische Dichte von 7 auf 0 bei etwa einer Wellenlänge von 1067 nm abfällt.

Mit der beschriebenen Beschichtung 22 vom Typ LP02-1064RE erhält man wiederum die in Figur 3 dargestellte Prinzipskizze des Aufbaus eines optischen Systems 10.

Die zweite Beschichtung 24 ist wellenlängenunabhängig hoch reflektierend ausgebildet. Bei einem Neigungswinkel 26 von 0,5° ergibt sich für Glassubstrate vom Typ BK7 für ein Strahlungsfeld mit einer Wellenlänge von 1030 nm der dargestellte Weg des Strahlungsfeldes durch den Bereich 44. Auf der Oberseite 62 ist vorzugsweise eine Antireflexschicht aufgebracht. Die zweite Beschichtung 24 bildet in diesem Fall einen reinen Langpassfilter, mithin also ein Kantenfilter.

Bei der beschriebenen Anordnung wird das Strahlungsfeld 12 45 mal doppeltreflektiert. Das Strahlungsfeld 12 übt somit ungefähr den 45-fachen Lichtdruck auf die beiden Reflexionselemente 50 und 52 aus.

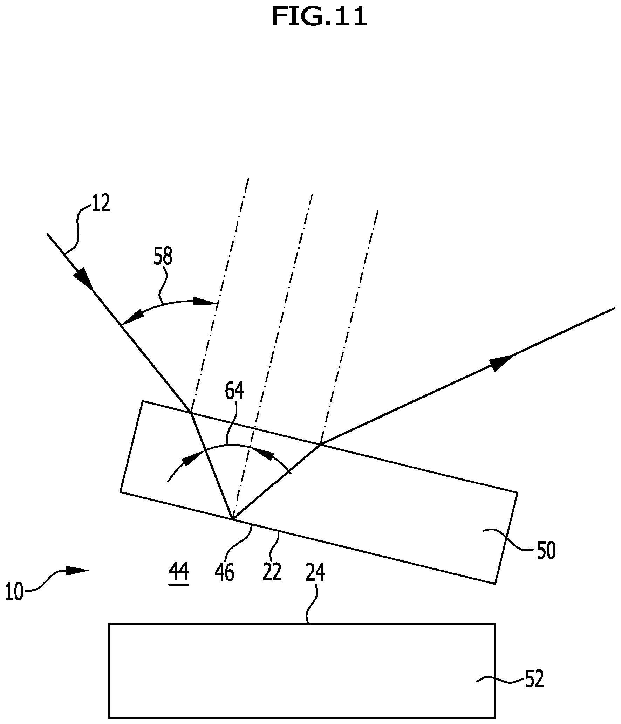

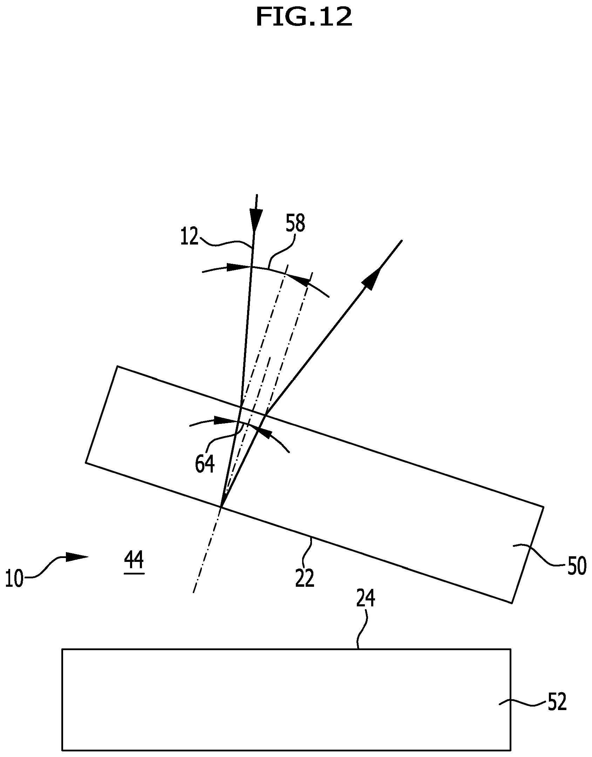

Die Figuren 11 und 12 zeigen beispielhaft Bedingungen, bei denen die erste Beschichtung 22 das Einkoppeln des Strahlungsfeldes 12 in den Bereich 44 des optischen Systems 10 nicht ermöglicht. Ist der Strahlungsfeldwinkel 58 so groß, dass auch der Einfallswinkel 64 einen Grenzwert der ersten Beschichtung 22 übersteigt, wird das Strahlungsfeld 12 an der ersten Beschichtung reflektiert oder im Wesentlichen reflektiert. Eine Einkopplung in den Bereich 44 ist somit nicht möglich. Die Einkoppelöffnung 46 ist unter dieser Bedingung für das Strahlungsfeld 12 geschlossen.

Bei der schematischen Anordnung in Figur 12 ist der Strahlungsfeldwinkel 58 so klein gewählt, dass der aufgrund der Brechung im ersten Reflexionselement 50 vorgegebene Einfallswinkel 64 ebenfalls zu klein ist, um die Einkopplung des Strahlungsfeldes 12 in den Bereich 44 zu ermöglichen. Auch in diesem Fall findet im Wesentlichen eine Reflexion an der ersten Beschichtung 22 statt.

Die Anordnungen aus den Figuren 11 und 12 betreffen insbesondere Strahlungsquellen 28, die nicht monochromatisch sind. Von diesen erzeugten Strahlungsfeldern 12 wird lediglich ein Ausschnitt des elektromagnetischen Spektrums, also ein definierter Wellenlängenbereich, im Bereich 44 zwischen den Beschichtungen 22 und 24 eingefangen.

Mögliche Kombinationen hierfür bestehen in der Nutzung dispersiver Elemente, insbesondere in Form von Prismen, Gitter, Linsen oder Glasblöcken, welche das spektrale Winkelverhalten aus der obigen Gleichung über ein nicht monochromatisches Spektrum der Strahlungsquelle 28 annähern. So ist es insbesondere möglich, unterschiedliche Wellenlängen des Strahlungsfeldes 12 in unterschiedlichen Winkeln zu kollimieren, wodurch zumindest theoretisch eine Einkopplung des nicht monochromatischen Strahlungsfeldes 12 in den Bereich 44 in einem Schritt ermöglicht wird.

Die oben beschriebenen Ausführungsbeispiele optischer Systeme 10 ermöglichen insbesondere einen einfachen und kompakten Aufbau optischer Verzögerungsstrecken, die zum zeitlichen optischen Abtasten eingesetzt werden.

Auch als optische Phasenschieber für die Kommunikationstechnik oder die Lasertechnik können derartige optische System 10 eingesetzt werden.

Des Weiteren ergibt sich auch eine Anwendung als Laser-Leistungsmesser, beispielsweise in Form des oben beschriebenen Messgeräts 96. Mit diesem lässt sich insbesondere eine Laserleistung überprüfen. Da insbesondere sehr kleine Laserleistungen durch die Vervielfachung der Wirkung des Strahlungsdrucks des Strahlungsfeldes 12 messbar sind, reicht es zur Kontrolle der Laserleistung aus, wenn nur ein sehr kleiner Teil des Strahlungsfeldes 12 für die Leistungsmessung ausgekoppelt wird.

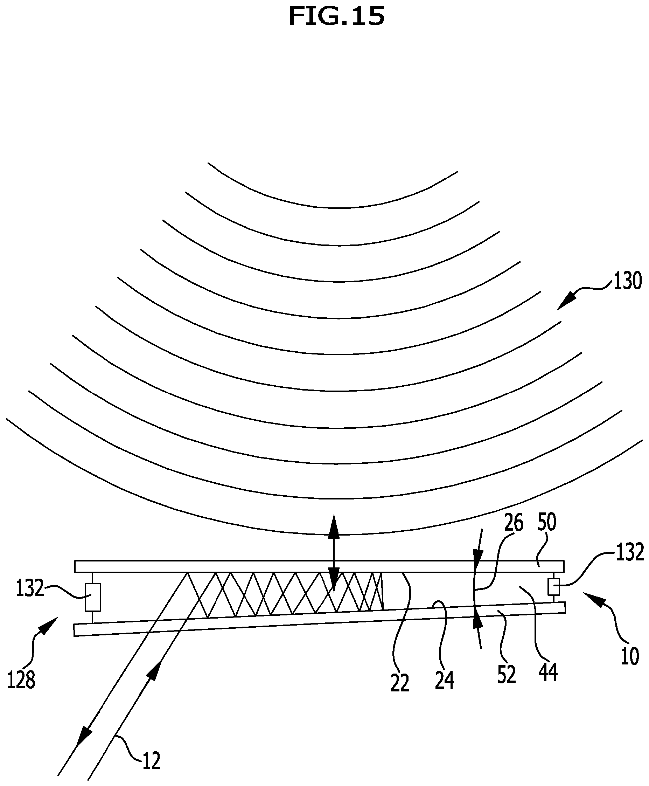

Figur 15 zeigt schematisch ein weiteres Ausführungsbeispiel eines optischen Systems 10, welches zur Ausbildung eines Mikrophons 128 eingesetzt werden kann.

Das parallel zu sich selbst verschieblich angeordnete erste Reflexionselement 50 kann in Folge einer äußeren Anregung mittels Schallwellen 130 aus einer Grundstellung entgegen der Wirkung der in Figur 15 beispielhaft schematisch eingezeichneten Federelemente 132, die eine Rückstelleinrichtung bilden, in Richtung auf das zweite Reflexionselement 52 hin und von diesem weg ausgelenkt werden. Aufgrund der Bewegung des ersten Reflexionselements 50 verändern sich ein Laufweg und damit die Umlaufzeit des Strahlungsfelds 12 im Bereich 44 zwischen den Beschichtungen 22 und 24. Durch Messen der Änderung der Umlaufzeit können zeitlich schwankende Drücke in dem das optische System umgebenden Medium bestimmt werden. Aus der Ermittlung der Änderungen der Umlaufzeit lassen sich somit Schallwellen nicht nur detektieren, sondern auch auswerten, beispielsweise um Geräusche und Sprache in optische und anschließend elektrische Signale umzuwandeln.

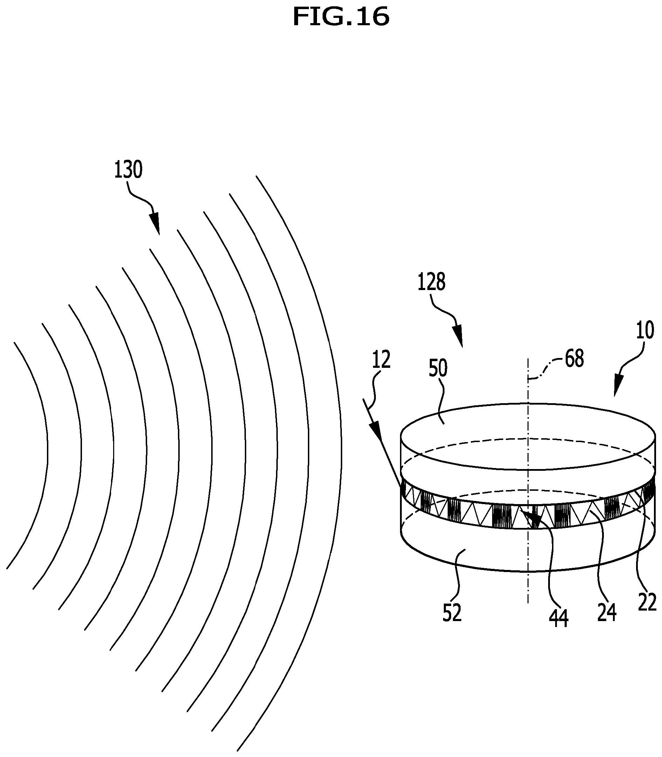

Ein weiteres Ausführungsbeispiel eines optischen Systems 10 ist schematisch in Figur 16 dargestellt. Die Schallwellen 130 beziehungsweise zeitlich schwankende Drücke in einem das optische System 10 umgebenden Medium führen zu einer Änderung eines Brechungsindex in dem im Bereich 44 eingeschlossen Medium. Dies ist in Figur 16 im rechten Teil im Bereich 44 durch die optisch dichteren und dünneren Bereiche rein schematisch angedeutet. Durch die Änderung des Brechungsindexes ändern sich auch der Lichtweg und damit die Umlaufzeit des Strahlungsfelds 12 im Bereich 44. So kann, ähnlich wie bei dem in Figur 15 dargestellten Ausführungsbeispiel des optischen Systems 10, das optische System 10 zur Detektion zeitlicher Druckschwankungen genutzt werden, beispielsweise als Bestandteil eines Mikrophons 128. Bei diesem Ausführungsbeispiel müssen die Beschichtungen 22 und 24 relativ zueinander nicht beweglich angeordnet sein.

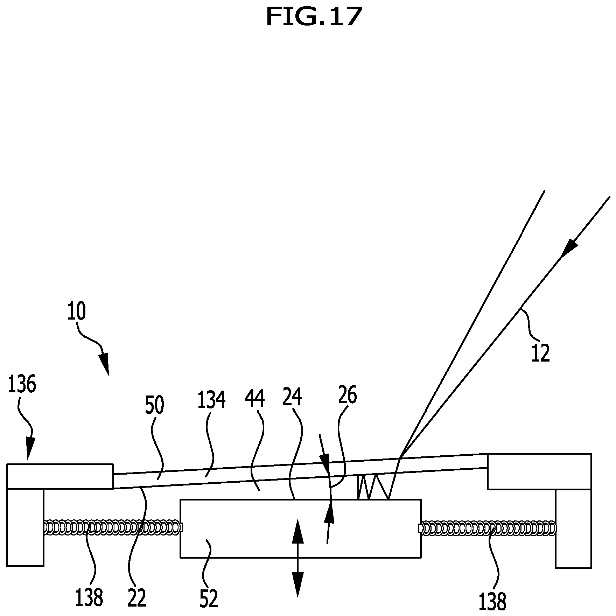

Ein weiteres Ausführungsbeispiel eines optischen Systems 10 ist schematisch in Figur 17 dargestellt. Das erste Reflexionselement 50 ist in Form eines Kantenfilters 134 ausgebildet und mit der ersten Beschichtung 22 versehen, die in Richtung auf eine zweite Beschichtung 24 eines zweiten Reflexionselements 52 weist. Das zweite Reflexionselement 52 ist in Form einer Testmasse ausgebildet, die über Federelemente 138, die eine Rückstelleinrichtung definieren, beweglich mit einem Gehäuse 136 verbunden ist. Das erste Reflexionselement 50 ist unbeweglich am Gehäuse 136 angeordnet. Die Beschichtungen 22 und 24 sind relativ zueinander um den Neigungswinkel 26 in einer Art und Weise geneigt, wie dies oben mehrfach beschrieben wurde.

Wird die Testmasse, also das zweite Reflexionselement 52, beschleunigt, wird es aus einer Grundstellung entgegen der Wirkung der Federelemente 138 ausgelenkt. Damit ändern sich ein Lichtweg und somit eine Umlaufzeit des Strahlungsfelds 12 im Bereich 44 zwischen den Beschichtungen 22 und 24. Bei wirkenden Beschleunigungen ändert sich zumindest theoretisch ein Abstand zwischen den Beschichtungen 22 und 24 proportional zur wirkenden Beschleunigung. Mit der beschriebenen Anordnung können ein hoher Dynamikbereich und insbesondere auch eine hohe Empfindlichkeit für die Messung von wirkenden Beschleunigungen erreicht werden.

Bei dem in Figur 17 dargestellten Ausführungsbeispiel des optischen Systems 10 können die Reflexionselemente 50 und 52 auch vertauscht angeordnet werden, das heißt alternativ kann das erste Reflexionselement mittels eines Rückstellelements am Gehäuse 136 angeordnet werden und das zweite Reflexionselement 52 unbeweglich am Gehäuse 136.

Bei den oben beschriebenen optischen Systemen 10 ist die zweite Beschichtung 24 vorzugsweise hochreflektierend ausgebildet. Hier ist es optional möglich, auch eine Beschichtung vorzusehen, die eine weitere Einkoppel- oder Auskoppelöffnung für das Strahlungsfeld 12 definiert. Eine solche Anordnung ermöglicht es insbesondere, das Strahlungsfeld 12 zwischen der Einkopplung und der Auskopplung aus dem Bereich 44 noch leichter räumlich voneinander zu trennen als durch eine Verkippung des optischen Systems 10 wie oben beschrieben.

Die erste Beschichtung 22 und die zweite Beschichtung 24 können prinzipiell selbsttragend ausgebildet sein. Beispielsweise beim Einsatz in Verbindung mit einem Laser-Leistungsmesser ist es möglich, die erste Beschichtung 22 oder die zweite Beschichtung 24 direkt auf Teile der Druckmesssensor 102 aufzubringen, beispielsweise direkt auf eine Oberfläche des Druckmesssensors 102.

Insgesamt lässt sich so sehr kompakt ein optisches System 10 ausbilden, mit dem sich ein Strahlungsfeld 12 gezielt mehrfach umlenken lässt. Durch die Wahl von Parametern des Systems 12, insbesondere des Neigungswinkels 26, der Art der Beschichtungen 22 und 24 sowie das Strahlungsfeldwinkels 58 und des daraus resultierenden Einfallswinkels 64, lässt sich die Zahl der Umläufe zwischen den Beschichtungen 22 und 24 in gewünschter Weise einstellen. Damit kann ein Weg des Strahlungsfeldes 12 im Bereich 44 vorgegeben und wie oben ebenfalls beschrieben gegebenenfalls in gewünschter Weise geändert werden.

## Bezugszeichenliste

| | |
|---|---|
| 10 | optisches System |
| 12 | Strahlungsfeld |
| 14 | erste Reflexionsfläche |
| 16 | zweite Reflexionsfläche |
| 18 | erste Reflexionsflächenebene |
| 20 | zweite Reflexionsflächenebene |
| 22 | erste Beschichtung |
| 24 | zweite Beschichtung |
| 26 | Neigungswinkel |
| 28 | Strahlungsquelle |
| 30 | Bandpassfilter |
| 32 | Durchlässigkeitsbereich |
| 34 | Flanke |
| 36 | Flanke |
| 38 | Durchlässigkeitsbereich |
| 40 | Flanke |
| 42 | Flanke |
| 44 | Bereich |
| 46 | Einkoppelöffnung |
| 48 | Einfallswinkel |
| 50 | erstes Reflexionselement |
| 52 | zweites Reflexionselement |
| 54 | Dicke |
| 56 | Dicke |
| 58 | Strahlungsfeldwinkel |
| 60 | Flächennormale |
| 62 | Oberseite |
| 64 | Einfallswinkel |
| 66 | Unterseite |
| 68 | Symmetrieebene |
| 70 | Durchmesser |
| 72 | Abstandsänderungseinrichtung |
| 74 | Verschiebung |
| 76 | Antriebseinrichtung |
| 78 | Piezoaktuator |
| 80 | Distanzmesseinrichtung |
| 82 | Interferometer |
| 84 | Strahlungsquelle |
| 86 | Strahlungsfeld |
| 88 | Strahlteiler |
| 90 | Spiegel |
| 92 | Spiegel |
| 94 | Detektor |
| 96 | Messgerät |
| 98 | Strahlungsdruckmesseinrichtung |
| 100 | Waage |
| 102 | Druckmesssensor |
| 104 | Absorptionsmesseinrichtung |
| 106 | Probe |
| 108 | Probenzelle |
| 110 | Strahlungsquelle |
| 112 | Detektor |
| 114 | Linse |
| 116 | elektrooptische Schicht |
| 118 | Flüssigkristall |
| 120a | Spiegel |
| 120b | Spiegel |
| 122 | Schwenkachse |
| 124 | Schwenkantrieb |
| 126 | Antireflexbeschichtung |
| 128 | Abbildungseinrichtung |
| 130 | Schallwellen |
| 132 | Federelement |
| 134 | Kantenfilter |
| 136 | Gehäuse |
| 138 | Federelement |

## Patentansprüche

1. Optisches System (10) zum mehrfachen Umlenken eines elektromagnetischen Strahlungsfeldes (12), welches System (10) eine erste Reflexionsfläche (14) und eine zweite Reflexionsfläche (16) umfasst, welche erste Reflexionsfläche (14) eine erste Reflexionsflächenebene (18) definiert und welche zweite Reflexionsfläche (16) eine zweite Reflexionsflächenebene (20) definiert, welche erste Reflexionsfläche (14) eine erste, elektromagnetische Strahlung reflektierende Beschichtung (22) umfasst und welche zweite Reflexionsfläche (16) eine zweite, elektromagnetische Strahlung reflektierende Beschichtung (24) umfasst, wobei die erste Reflexionsfläche (14) und die zweite Reflexionsfläche (16) voneinander beabstandet sind, wobei die erste Reflexionsflächenebene (18) und die zweite Reflexionsflächenebene (20) gegeneinander geneigt sind und einen Neigungswinkel (26) einschließen und wobei die erste Reflexionsfläche (14) und/oder die zweite Reflexionsfläche (16) mindestens eine optische Einkoppelöffnung (46) zum Einkoppeln eines optischen Strahlungsfeldes (12) zwischen die erste und die zweite reflektierende Beschichtung (22, 24) aufweist, **dadurch gekennzeichnet, dass** die mindestens eine optische Einkoppelöffnung (46) in Form einer wellenlängenabhängigen und einfallswinkelabhängigen Einkoppelöffnung (46) für ein optisches Strahlungsfeld (12) ausgebildet ist und dass die erste reflektierende Beschichtung (22) und/oder die zweite reflektierende Beschichtung (24) die mindestens eine wellenlängenabhängige und einfallswinkelabhängige Einkoppelöffnung (46) definieren oder umfassen.

2. Optisches System nach Anspruch 1, **dadurch gekennzeichnet, dass** die erste Reflexionsfläche (14) und die zweite Reflexionsfläche (16) relativ zueinander beweglich angeordnet sind, wobei insbesondere der Neigungswinkel (26) unveränderlich ist.

3. Optisches System nach einem der voranstehenden Ansprüche, **dadurch gekennzeichnet, dass**

   a) das optische System ein erstes Reflexionselement (50) und ein zweites Reflexionselement (52) umfasst, welches erste Reflexionselement (50) die erste Reflexionsfläche (14) umfasst und welches zweite Reflexionselement die zweite Reflexionsfläche (16) umfasst, und/oder
   b) die erste Reflexionsfläche (14), insbesondere das erste Reflexionselement (50), zur ersten Reflexionsflächenebene (18) verschieblich angeordnet oder gelagert ist und/oder dass die zweite Reflexionsfläche (16), insbesondere das zweite Reflexionselement (52), zur zweiten Reflexionsflächenebene (20) verschieblich angeordnet oder gelagert ist
   und/oder
   c) das optische System eine Abstandsänderungseinrichtung (72) zum Verändern eines Abstands zwischen der ersten Reflexionsfläche (14) und der zweiten Reflexionsfläche (16) umfasst,

      wobei insbesondere die Abstandsänderungseinrichtung (72) ausgebildet ist zum Verschieben der ersten Reflexionsfläche (14), insbesondere des ersten Reflexionselements (50), senkrecht zur ersten Reflexionsflächenebene (18) und/oder der zweiten Reflexionsfläche (16), insbesondere des zweiten Reflexionselements (52), senkrecht zur zweiten Reflexionsflächenebene (20),
      wobei weiter insbesondere die Abstandsänderungseinrichtung (72)

         - eine elektromagnetische oder piezomechanische Antriebseinrichtung (76) umfasst
und/oder
- mindestens einen Piezoaktuator (78) umfasst.

4. Optisches System nach einem der voranstehenden Ansprüche, **dadurch gekennzeichnet, dass** die erste Reflexionsfläche (14) und die zweite Reflexionsfläche (16) aufeinander zu weisend angeordnet oder ausgebildet sind.

5. Optisches System nach einem der voranstehenden Ansprüche, **dadurch gekennzeichnet, dass**

   a) die erste reflektierende Beschichtung (22) in Form einer hochreflektierenden Beschichtung oder in Form einer wellenlängen- und einfallswinkelabhängigen reflektierenden Beschichtung ausgebildet ist
   und/oder
   b) die zweite reflektierende Beschichtung (24) in Form einer hochreflektierenden Beschichtung oder in Form einer wellenlängen- und einfallswinkelabhängigen reflektierenden Beschichtung ausgebildet ist,

      wobei insbesondere die erste Beschichtung (22) und/oder die zweite Beschichtung (24) in Form eines einfallswinkelabhängigen Kantenfilters oder eines einfachen oder doppelten Bandbassfilters (30) ausgebildet sind,
      wobei weiter insbesondere der Kantenfilter oder der einfache oder doppelte Bandbassfilter (30)

         - eine Flankensteilheit aufweisen, die mindestens 1 OD/3 nm beträgt, vorzugsweise in einem Bereich von etwa 1 OD/3 nm bis etwa 3 OD/3 nm liegt, insbesondere etwa 2 OD/3 nm beträgt, und/oder
         - ein hohes Auslöschungsverhältnis aufweisen, insbesondere eine optische Dichte von mindestens 3, weiter insbesondere von mindestens 6.

6. Optisches System nach einem der voranstehenden Ansprüche, **dadurch gekennzeichnet, dass**

   a) die erste Beschichtung (22) und/oder die zweite Beschichtung (24) in Form einer dichroitischen Beschichtung ausgebildet sind
   und/oder
   b) die erste Beschichtung (22) und/oder die zweite Beschichtung (24) polarisationsunabhängig ausgebildet sind

und/oder

c) der Neigungswinkel (26) in einem Bereich von etwa 0° bis etwa 3° liegt, insbesondere in einem Bereich von etwa 0,5° bis etwa 1,5°, weiter bevorzugt etwa 1° beträgt.

7. Optisches System nach einem der Ansprüche 3 bis 6, **dadurch gekennzeichnet, dass** erste Reflexionselement (50) und/oder das zweite Reflexionselement (52)

a) in Form eines für elektromagnetische Strahlung durchlässigen Festkörpers ausgebildet sind,

wobei insbesondere der Festkörper in Form eines Kristalls oder aus Glas ausgebildet ist,
wobei weiter insbesondere der Kristall aus Yttrium-Aluminium-Granat oder Saphir oder aus einem Halbleiter ausgebildet ist, und/oder

b) eine Dicke (54, 56) in einem Bereich von etwa 1 mm bis etwa 10 mm aufweisen, insbesondere in einem Bereich von etwa 2 mm bis etwa 5 mm, und/oder

c) scheibenförmig oder quaderförmig ausgebildet sind.

8. Optisches System nach einem der voranstehenden Ansprüche, **dadurch gekennzeichnet, dass**

a) die mindestens eine optische Einkoppelöffnung in Form eines beschichtungsfreien Einkoppelbereichs auf der ersten Reflexionsfläche oder in Form eines beschichtungsfreien Einkoppelbereichs auf der zweiten Reflexionsfläche ausgebildet ist,
und/oder
b) die erste reflektierende Beschichtung (22) und/oder die zweite reflektierende Beschichtung (24) in Form einer VersaChrome® TBP01-900/11-Beschichtung oder in Form einer LP02-1064RE-Beschichtung der Fa. Semrock, Inc. ausgebildet sind
und/oder
c) die erste Beschichtung (22) und/oder die zweite Beschichtung (24) ausgebildet sind zum Reflektieren von elektromagnetischer Strahlung in einem Wellenlängenbereich von etwa 300 nm bis etwa 1700 nm
und/oder
d) zwischen der ersten Reflexionsfläche (14) und der zweiten Reflexionsfläche (16) eine elektrooptische Schicht (116) oder ein elektrooptisches Element angeordnet oder ausgebildet sind,

wobei insbesondere die elektrooptische Schicht (116) einen Flüssigkristall (118) umfasst.

9. Optisches System nach einem der voranstehenden Ansprüche, **gekennzeichnet durch** eine Strahlungsquelle (28) zum Erzeugen eines elektromagnetischen Strahlungsfeldes (12),
wobei insbesondere

a) das elektromagnetische Strahlungsfeld (12) unter einem Strahlungsfeldwinkel (58) bezogen auf eine Flächennormale (60) der ersten Reflexionsfläche (14) oder der zweiten Reflexionsfläche (16) auf die erste oder die zweite Beschichtung (22, 24) ausgerichtet ist
und/oder
b) das Strahlungsfeld (12) kollimiert ist.

10. Messgerät (96) zum Messen einer Leistung eines elektromagnetischen Strahlungsfeldes (12) mit einer Strahlungsdruckmesseinrichtung (98), **dadurch gekennzeichnet, dass** die Strahlungsdruckmesseinrichtung (98) ein optisches System (10) nach einem der voranstehenden Ansprüche umfasst,

wobei insbesondere die Strahlungsdruckmesseinrichtung (98) mindestens einen Druckmesssensor (102) umfasst und wobei die erste Beschichtung (22), insbesondere das erste Reflexionselement (50), oder die zweite Beschichtung (24), insbesondere das zweite Reflexionselement (52), unbeweglich mit dem mindestens einen Druckmesssensor (102) gekoppelt oder auf diesem angeordnet oder gehalten ist,
wobei weiter insbesondere die Strahlungsdruckmesseinrichtung (98) eine Waage (100) umfasst und wobei die Waage (100) den mindestens einen Druckmesssensor (102) umfasst.

11. Absorptionsmesseinrichtung (104) zum Messen der Absorption elektromagnetischer Strahlung in einer Probe (106), umfassend eine Probenzelle (108) zum Aufnehmen der Probe (106), **gekennzeichnet durch** ein optisches System (10) nach einem der Ansprüche 1 bis 9.

12. Absorptionsmesseinrichtung nach Anspruch 11, **dadurch gekennzeichnet, dass**

a) die Probenzelle (108) zwischen der ersten Beschichtung (22) und der zweiten Beschichtung (24) angeordnet oder ausgebildet ist
und/oder
b) die Absorptionsmesseinrichtung eine Strahlungsquelle (110) umfasst zum Erzeugen elektromagnetischer Strahlung und einen Detektor (112) zum Detektieren elektromagnetischer Strahlung, wobei die Strahlungsquelle (110) angeordnet ist zum Beaufschlagen der Probe (106) mit Strahlung und wobei der Detektor (112) angeordnet oder ausgebildet ist zum Messen der durch die Probe (106) transmittierten Strahlung, und/oder

c) die Absorptionsmesseinrichtung eine Abbildungseinrichtung (128) umfasst umfassend mindestens ein erstes Abbildungselement (114) und mindestens ein zweites Abbildungselement (114), wobei die Probenzelle in einem Strahlengang zwischen dem mindestens einen ersten Abbildungselement und dem mindestens einen zweiten Abbildungselement angeordnet oder ausgebildet ist,

wobei weiter insbesondere die Abbildungseinrichtung (128) in Form einer 4f-Abbildungseinrichtung ausgebildet ist.

13. Distanzmesseinrichtung (80) umfassend ein Interferometer (82), **gekennzeichnet durch** ein optisches System nach einem der Ansprüche 1 bis 9, wobei insbesondere das Interferometer einen beweglichen Spiegel (92) umfasst und wobei der bewegliche Spiegel (92) die erste Beschichtung (22), insbesondere das erste Reflexionselement (50), oder die zweite Beschichtung (24), insbesondere das zweite Reflexionselement (52), umfasst oder trägt.

14. Scanvorrichtung (130) zum Ablenken eines Strahlungsfelds (12) umfassend eine Ablenkeinrichtung, **dadurch gekennzeichnet, dass** die Ablenkeinrichtung ein optisches System nach einem der Ansprüche 1 bis 9 umfasst.

15. Verwendung eines optischen Systems (10) nach einem der Ansprüche 1 bis 9 zum Ausbilden einer optischen Verzögerungsstrecke oder eines Phasenschiebers oder einer Absorptionsmesseinrichtung (104) oder eines Messgeräts (96) zum Messen einer Leistung eines elektromagnetischen Strahlungsfeldes (12) oder einer Scanvorrichtung (130) oder eines Mikrophons oder eines Beschleunigungssensors.

**Claims**

1. Optical system (10) for multiple redirection of an electromagnetic radiation field (12), which system (10) comprises a first reflective surface (14) and a second reflective surface (16), which first reflective surface (14) defines a first reflective surface plane (18) and which second reflective surface (16) defines a second reflective surface plane (20), which first reflective surface (14) comprises a first electromagnetic radiation reflective coating (22) and which second reflective surface (16) comprises a second electromagnetic radiation reflective coating (24), wherein the first reflective surface (14) and the second reflective surface (16) are spaced apart from one another, wherein the first reflective surface plane (18) and the second reflective surface plane (20) are inclined relative to one another and form between them an angle of inclination (26), and wherein the first reflective surface (14) and/or the second reflective surface (16) comprises at least one optical incoupling opening (46) for incoupling an optical radiation field (12) between the first and the second reflective coating (22, 24), **characterized in that** the at least one optical incoupling opening (46) is configured in the form of a wavelength-dependent and angle-of-incidence-dependent incoupling opening (46) for an optical radiation field (12) and **in that** the first reflective coating (22) and/or the second reflective coating (24) defines or comprises the at least one wavelength-dependent and angle-of-incidence-dependent incoupling opening (46).

2. Optical system in accordance with claim 1, **characterized in that** the first reflective surface (14) and the second reflective surface (16) are arranged in movable relation to one another, in particular wherein the angle of inclination (26) is unchangeable.

3. Optical system in accordance with any one of the preceding claims, **characterized in that**

a) the optical system comprises a first reflective element (50) and a second reflective element (52), which first reflective element (50) comprises the first reflective surface (14) and which second reflective element comprises the second reflective surface (16), and/or

b) the first reflective surface (14), in particular the first reflective element (50), is arranged or supported for displacement relative to the first reflective surface plane (18) and/or **in that** the second reflective surface (16), in particular the second reflective element (52), is arranged or supported for displacement relative to the second reflective surface plane (20), and/or

c) the optical system comprises a distance changing device (72) for changing a distance between the first reflective surface (14) and the second reflective surface (16),

in particular wherein the distance changing device (72) is configured for displacing the first reflective surface (14), in particular the first reflective element (50), perpendicularly to the first reflective surface plane (18) and/or for displacing the second reflective surface (16), in particular the second reflective element (52), perpendicularly to the second reflective surface plane (20),

further in particular wherein the distance changing device (72)

- comprises an electromagnetic or a piezomechanical drive device (76), and/or
- comprises at least one piezo actuator (78).

4. Optical system in accordance with any one of the preceding claims, **characterized in that** the first reflective surface (14) and the second reflective surface (16) are arranged or formed such that they point towards one another.

5. Optical system in accordance with any one of the preceding claims, **characterized in that**

a) the first reflective coating (22) is configured in the form of a highly reflective coating or in the form of a wavelength-dependent and angle-of-incidence-dependent reflective coating, and/or

b) the second reflective coating (24) is configured in the form of a highly reflective coating or in the form of a wavelength-dependent and angle-of-incident-dependent reflective coating,

in particular wherein the first coating (22) and/or the second coating (24) is configured in the form of an angle-of-incidence-dependent edge filter or a single or dual bandpass filter (30),

further in particular wherein the edge filter or the single or dual bandpass filter (30)

- has an edge steepness of at least 1 OD/3 nm, preferably in a range of approximately 1 OD/3 nm to approximately 3 OD/3 nm, in particular approximately 2 OD/3 nm, and/or
- has a high cancellation ratio, in particular an optical density of at least 3, further in particular of at least 6.

6. Optical system in accordance with any one of the preceding claims, **characterized in that**

a) the first coating (22) and/or the second coating (24) is configured in the form of a dichroic coating, and/or

b) the first coating (22) and/or the second coating (24) is of polarization-independent configuration, and/or

c) the angle of inclination (26) is in a range of approximately 0° to approximately 3°, in particular in a range of approximately 0.5° to approximately 1.5°, further preferably approximately 1°.

7. Optical system in accordance with any one of claims 3 to 6, **characterized in that** the first reflective element (50) and/or the second reflective element (52)

a) is configured in the form of a solid body that is transmissive to electromagnetic radiation,

in particular wherein the solid body is configured in the form of a crystal or is formed from glass,

further in particular wherein the crystal is formed from yttrium aluminium garnet, or sapphire, or from a semiconductor, and/or

b) has a thickness (54, 56) in a range of approximately 1 mm to approximately 10 mm, in particular in a range of approximately 2 mm to approximately 5 mm, and/or

c) is configured in the shape of a disk or a cuboid.

8. Optical system in accordance with any one of the preceding claims, **characterized in that**

a) the at least one optical incoupling opening is configured in the form of a coating-free incoupling area on the first reflective surface or in the form of a coating-free incoupling area on the second reflective surface, and/or

b) the first reflective coating (22) and/or the second reflective coating (24) is configured in the form of a VersaChrome® TBP01-900/11 coating or in the form of an LP02-1064RE coating, available from Semrock, Inc., and/or

c) the first coating (22) and/or the second coating (24) is configured for reflecting electromagnetic radiation in a range of wavelengths of approximately 300 nm to approximately 1700 nm, and/or

d) an electrooptical layer (116) or an electrooptical element is arranged or formed between the first reflective surface (14) and the second reflective surface (16),

in particular wherein the electrooptical layer (116) comprises a liquid crystal (118).

9. Optical system in accordance with any one of the preceding claims, **characterized by** a radiation source (28) for generating an electromagnetic radiation field (12), in particular wherein

a) the electromagnetic radiation field (12) is oriented towards the first or the second coating (22, 24) at a radiation field angle (58) with respect to a surface normal (60) of the first reflective surface (14) or the second reflective surface (16), and/or

b) the radiation field (12) is collimated.

10. Measurement instrument (96) for measuring a power of an electromagnetic radiation field (12) using a radiation pressure measurement device (98), **characterized in that** the radiation pressure measurement device (98) comprises an optical system (10) in accordance with any one of the preceding claims,

in particular wherein the radiation pressure measurement device (98) comprises at least one pressure measurement sensor (102), and wherein the first coating (22), in particular the first reflective element (50), or the second coating (24), in particular the second reflective element (52), is non-movably coupled to the at least one pressure measurement sensor (102) or arranged thereon or held thereto, further in particular wherein the radiation pressure measurement device (98) comprises a scale (100), and wherein the scale (100) comprises the at least one pressure measurement sensor (102).

11. Absorption measurement device (104) for measuring the absorption of electromagnetic radiation in a sample (106), comprising a sample cell (108) for receiving the sample (106), **characterized by** an optical system (10) in accordance with any one of claims 1 to 9.

12. Absorption measurement device in accordance with claim 11, **characterized in that**

a) the sample cell (108) is arranged or formed between the first coating (22) and the second coating (24), and/or

b) the absorption measurement device comprises a radiation source (110) for generating electromagnetic radiation and a detector (112) for detecting electromagnetic radiation, wherein the radiation source (110) is arranged for exposing the sample (106) to radiation and wherein the detector (112) is arranged or formed for measuring the radiation transmitted through the sample (106), and/or

c) the absorption measurement device comprises an imaging device (128), comprising at least one first imaging element (114) and at least one second imaging element (114), wherein the sample cell is arranged or formed in a beam path between the at least one first imaging element and the at least one second imaging element,

further in particular wherein the imaging device (128) is configured in the form of a 4f imaging device.

13. Distance measurement device (80), comprising an interferometer (82), **characterized by** an optical system in accordance with any one of claims 1 to 9, in particular wherein the interferometer comprises a movable mirror (92), and wherein the movable mirror (92) comprises or carries the first coating (22), in particular the first reflective element (50), or the second coating (24), in particular the second reflective element (52).

14. Scan apparatus (130) for deflecting a radiation field (12), comprising a deflection device, **characterized in that** the deflection device comprises an optical system in accordance with any one of claims 1 to 9.

15. Use of an optical system (10) in accordance with any one of claims 1 to 9 for forming an optical delay path, or a phase shifter, or an absorption measurement device (104), or a measurement instrument (96) for measuring a power of an electromagnetic radiation field (12), or a scan apparatus (130), or a microphone, or an acceleration sensor.

## Revendications

1. Système optique (10) pour la déviation multiple d'un champ de rayonnement électromagnétique (12), lequel système (10) comprend une première surface réfléchissante (14) et une deuxième surface réfléchissante (16), laquelle première surface réfléchissante (14) définit un premier plan de surface réfléchissante (18) et laquelle deuxième surface réfléchissante (16) définit un deuxième plan de surface réfléchissante (20), laquelle première surface réfléchissante (14) comprend un premier revêtement (22) réfléchissant le rayonnement électromagnétique et laquelle deuxième surface réfléchissante (16) comprend un deuxième revêtement (24) réfléchissant le rayonnement électromagnétique, la première surface réfléchissante (14) et la deuxième surface réfléchissante (16) étant espacées l'une de l'autre, le premier plan de surface réfléchissante (18) et le deuxième plan de surface réfléchissante (20) étant inclinés l'un par rapport à l'autre et formant un angle d'inclinaison (26), et la première surface réfléchissante (14) et/ou la deuxième surface réfléchissante (16) comportant au moins une ouverture de couplage optique (46) pour coupler un champ de rayonnement optique (12) entre le premier et le deuxième revêtements réfléchissants (22, 24), **caractérisé en ce que** ladite au moins une ouverture de couplage optique (46) prend la forme d'une ouverture de couplage (46) qui dépend de la longueur d'onde et de l'angle d'incidence pour un champ de rayonnement optique (12) et **en ce que** le premier revêtement réfléchissant (22) et/ou le deuxième revêtement réfléchissant (24) définissent ou comprennent ladite au moins une ouverture de couplage (46) qui dépend de la longueur d'onde et de l'angle d'incidence.

2. Système optique selon la revendication 1, **caractérisé en ce que** la première surface réfléchissante (14) et la deuxième surface réfléchissante (16) sont agencées de manière mobile l'une par rapport à l'autre, dans lequel, en particulier, l'angle d'inclinaison (26) est invariable.

3. Système optique selon l'une quelconque des revendications précédentes, **caractérisé en ce que**

   a) le système optique comprend un premier élément réfléchissant (50) et un deuxième élément réfléchissant (52), lequel premier élément réfléchissant (50) comprend la première surface réfléchissante (14) et lequel deuxième élément réfléchissant comprend la deuxième surface réfléchissante (16),
   et/ou
   b) la première surface réfléchissante (14), en particulier le premier élément réfléchissant (50), est agencé ou logé de manière à pouvoir être déplacé par rapport au premier plan de surface réfléchissante (18) et/ou **en ce que** la deuxième surface réfléchissante (16), en particulier le deuxième élément réfléchissant (52), est agencé ou logé de manière à pouvoir être déplacé par rapport au deuxième plan de surface réfléchissant (20),
   et/ou
   c) le système optique comprend un dispositif de modification de la distance (72) permettant de modifier une distance entre la première surface réfléchissante (14) et la deuxième surface réfléchissante (16),

      dans lequel, en particulier, le dispositif de modification de la distance (72) est conçu pour déplacer la première surface réfléchissante (14), en particulier le premier élément réfléchissant (50), perpendiculairement au premier plan de surface réfléchissante (18) et/ou la deuxième surface réfléchissante (16), en particulier le deuxième élément réfléchissant (52), perpendiculairement au deuxième plan de surface réfléchissante (20),
dans lequel, en outre, en particulier, le dispositif de modification de la distance (72)

   - comprend un dispositif d'entraînement électromagnétique ou piézomécanique (76)
   et/ou
   - comprend au moins un actionneur piézoélectrique (78).

4. Système optique selon l'une quelconque des revendications précédentes, **caractérisé en ce que** la première surface réfléchissante (14) et la deuxième surface réfléchissante (16) sont agencées ou formées de manière à se faire face.

5. Système optique selon l'une quelconque des revendications précédentes, **caractérisé en ce que**

   a) le premier revêtement réfléchissant (22) prend la forme d'un revêtement hautement réfléchissant ou la forme d'un revêtement réfléchissant qui dépend de la longueur d'onde et de l'angle d'incidence
   et/ou
   b) le deuxième revêtement réfléchissant (24) prend la forme d'un revêtement hautement réfléchissant ou la forme d'un revêtement réfléchissant qui dépend de la longueur d'onde et de l'angle d'incidence,

      dans lequel, en particulier, le premier revêtement (22) et/ou le deuxième revêtement (24) prennent la forme d'un filtre à arêtes qui dépend de l'angle d'incidence ou d'un filtre passe-bande simple ou double (30),
      dans lequel, en outre, en particulier, le filtre à arêtes ou le filtre passe-bande simple ou double (30)

         - présentent une pente de flanc d'au moins 1 OD/3 nm, de préférence dans une plage d'environ 1 OD/3 nm à environ 3 OD/3 nm, en particulier d'environ 2 OD/3 nm,
         et/ou
         - présentent un rapport d'extinction élevé, en particulier une densité optique d'au moins 3, plus particulièrement d'au moins 6.

6. Système optique selon l'une quelconque des revendications précédentes, **caractérisé en ce que**

a) le premier revêtement (22) et/ou le deuxième revêtement (24) prennent la forme d'un revêtement dichroïque
et/ou

b) le premier revêtement (22) et/ou le deuxième revêtement (24) sont réalisés indépendamment de la polarisation
et/ou

c) l'angle d'inclinaison (26) se situe dans une plage d'environ 0° à environ 3°, en particulier dans une plage d'environ 0,5° à environ 1,5°, de préférence, en particulier, d'environ 1°.

7. Système optique selon l'une quelconque des revendications 3 à 6, **caractérisé en ce que** le premier élément réfléchissant (50) et/ou le deuxième élément réfléchissant (52)

a) prennent la forme d'un corps solide transparent au rayonnement électromagnétique,

dans lequel, en particulier, le corps solide est réalisé sous la forme d'un cristal ou en verre,
dans lequel, en outre, en particulier, le cristal est réalisé en grenat d'yttrium-aluminium ou de saphir ou à partir d'un semi-conducteur,
et/ou

b) présentent une épaisseur (54, 56) dans une plage d'environ 1 mm à environ 10 mm, en particulier dans une plage d'environ 2 mm à environ 5 mm,
et/ou

c) prennent la forme d'un disque ou d'un parallélépipède.

8. Système optique selon l'une quelconque des revendications précédentes, **caractérisé en ce que**

a) ladite au moins une ouverture de couplage optique prend la forme d'une zone de couplage sans revêtement sur la première surface réfléchissante ou la forme d'une zone de couplage sans revêtement sur la deuxième surface réfléchissante,
et/ou

b) le premier revêtement réfléchissant (22) et/ou le deuxième revêtement réfléchissant (24) sont réalisés sous la forme d'un revêtement Versachrome® TBP01-900/11 ou sous la forme d'un revêtement LP02-1064RE de la société Semrock, Inc.
et/ou

c) le premier revêtement (22) et/ou le second revêtement (24) sont conçus pour réfléchir un rayonnement électromagnétique dans une plage de longueurs d'onde d'environ 300 nm à environ 1700 nm et/ou

d) une couche électro-optique (116) ou un élément électro-optique est agencé ou formé entre la première surface réfléchissante (14) et la deuxième surface réfléchissante (16),

dans lequel, en particulier, la couche électro-optique (116) comprend un cristal liquide (118).

9. Système optique selon l'une quelconque des revendications précédentes, **caractérisé par** une source de rayonnement (28) pour générer un champ de rayonnement électromagnétique (12),
dans lequel, en particulier

a) le champ de rayonnement électromagnétique (12) est orienté vers le premier ou le deuxième revêtement (22, 24) sous un angle de champ de rayonnement (58) par rapport à une normale à la surface (60) de la première surface réfléchissante (14) ou de la deuxième surface réfléchissante (16)
et/ou

b) le champ de rayonnement (12) est collimaté.

10. Appareil de mesure (96) pour mesurer une puissance d'un champ de rayonnement électromagnétique (12) avec un dispositif de mesure de pression de rayonnement (98), **caractérisé en ce que** le dispositif de mesure de pression de rayonnement (98) comprend un système optique (10) selon l'une quelconque des revendications précédentes,

dans lequel, en particulier, le dispositif de mesure de pression de rayonnement (98) comprend au moins un capteur de mesure de pression (102) et dans lequel le premier revêtement (22), en particulier le premier élément réfléchissant (50), ou le deuxième revêtement (24), en particulier le deuxième élément réfléchissant (52), est couplé de manière immobile à au moins un capteur de mesure de pression (102) ou est agencé ou maintenu sur celui-ci,
dans lequel, en outre, en particulier, le dispositif de mesure de pression de rayonnement (98) comprend une balance (100) et dans lequel la balance (100) comprend ledit au moins un capteur de mesure de pression (102).

11. Dispositif de mesure d'absorption (104) pour mesurer l'absorption d'un rayonnement électromagnétique dans un échantillon (106), comprenant une cellule d'échantillonnage (108) pour recevoir l'échantillon (106), **caractérisé par** un système optique (10) selon l'une quelconque des revendications 1 à 9.

12. Dispositif de mesure d'absorption selon la revendication 11, **caractérisé en ce que**

a) la cellule d'échantillonnage (108) est agencée ou formée entre le premier revêtement (22) et le deuxième revêtement (24)
et/ou
b) le dispositif de mesure d'absorption comprend une source de rayonnement (110) pour générer un rayonnement électromagnétique et un détecteur (112) pour détecter un rayonnement électromagnétique, dans lequel la source de rayonnement (110) est agencée de manière à exposer l'échantillon (106) à un rayonnement et dans lequel le détecteur (112) est agencé ou formé pour mesurer le rayonnement transmis à travers l'échantillon (106),
et/ou
c) le dispositif de mesure d'absorption comprend un dispositif d'imagerie (128) comprenant au moins un premier élément d'imagerie (114) et au moins un deuxième élément d'imagerie (114), dans lequel la cellule d'échantillonnage est agencée ou formée dans un chemin optique entre ledit au moins un premier élément d'imagerie et ledit au moins un deuxième élément d'imagerie,

dans lequel, en outre, en particulier, le dispositif d'imagerie (128) prend la forme d'un dispositif d'imagerie 4f.

13. Dispositif de mesure de distance (80) comprenant un interféromètre (82), **caractérisé par** un système optique selon l'une quelconque des revendications 1 à 9,
dans lequel, en particulier, l'interféromètre comprend un miroir mobile (92) et dans lequel le miroir mobile (92) comprend ou porte le premier revêtement (22), en particulier le premier élément réfléchissant (50), ou le deuxième revêtement (24), en particulier le deuxième élément réfléchissant (52).

14. Dispositif de numérisation (130) pour dévier un champ de rayonnement (12) comprenant un dispositif de déviation, **caractérisé en ce que** le dispositif de déviation comprend un système optique selon l'une quelconque des revendications 1 à 9.

15. Utilisation d'un système optique (10) selon l'une des revendications 1 à 9 pour former une ligne à retard optique ou d'un déphaseur ou d'un dispositif de mesure d'absorption (104) ou d'un appareil de mesure (96) pour mesurer une puissance d'un champ de rayonnement électromagnétique (12) ou d'un dispositif de numérisation (130) ou d'un microphone ou d'un accéléromètre.

FIG.1

**FIG.2**

# FIG.3

FIG.4

# FIG.5

# FIG.6

FIG.7

EP 3 707 542 B1

# FIG.8

# FIG.9

EP 3 707 542 B1

## FIG.10

# FIG.11

# FIG.12

EP 3 707 542 B1

FIG.13

EP 3 707 542 B1

# FIG.14

# FIG.15

# FIG.16

# FIG.17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080080584 A1
- US 20060165151 A1
- US 20100265512 A1
- US 20020057725 A1
- US 20170229835 A1
- US 20160294146 A1
- WO 2011027731 A1